(19) Europäisches Patentamt
European Patent Office
Office européen des brevets

(11) EP 4 276 948 A1

(12) EUROPEAN PATENT APPLICATION
published in accordance with Art. 153(4) EPC

(43) Date of publication:
15.11.2023 Bulletin 2023/46

(21) Application number: 22917636.7

(22) Date of filing: 31.03.2022

(51) International Patent Classification (IPC):
*H01M 4/36* (2006.01)

(86) International application number:
PCT/CN2022/084556

(87) International publication number:
WO 2023/184397 (05.10.2023 Gazette 2023/40)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Contemporary Amperex Technology Co., Limited
Ningde, Fujian 352100 (CN)

(72) Inventors:
- FENG, Lingyun
Ningde City, Fujian 352100 (CN)
- LIU, Huihui
Ningde City, Fujian 352100 (CN)
- FAN, Yanhuang
Ningde City, Fujian 352100 (CN)
- FENG, Wei
Ningde City, Fujian 352100 (CN)

(74) Representative: Jacob, Reuben Ellis et al
Maucher Jenkins
Seventh Floor Offices
Artillery House
11-19 Artillery Row
London SW1P 1RT (GB)

# (54) POSITIVE ELECTRODE SHEET, SECONDARY BATTERY AND ELECTRIC DEVICE

(57) The present application provides a positive electrode plate, a secondary battery and a power consuming device. The positive electrode plate comprises a positive electrode current collector, a positive electrode film layer provided on at least one surface of the positive electrode current collector, and a conductive undercoat layer between the positive electrode current collector and the positive electrode film layer, wherein the positive electrode film layer comprises a positive electrode active material of a chemical formula of $Li_aA_xMn_{1-y}B_yP_{1-z}C_zO_{4-n}D_n$, and the conductive primer layer comprises a first polymer, a first water-based binder and a first conductive agent.

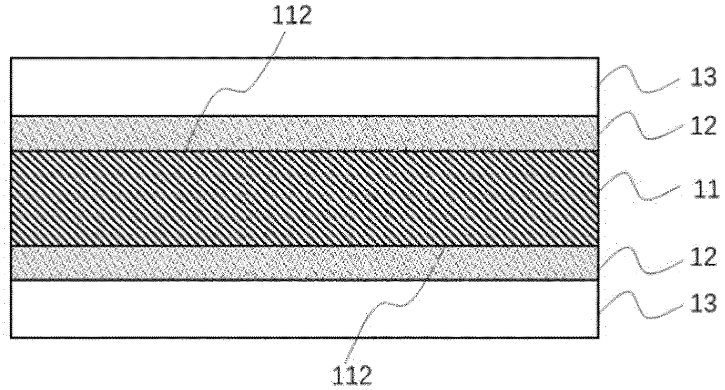


FIG. 1



Processed by Luminess, 75001 PARIS (FR)

## Description

### Technical Field

The present application relates to the technical field of batteries, and in particular to a positive electrode plate, a secondary battery and a power consuming device.

### Background Art

In recent years, with the increasing application range, secondary batteries are widely used in energy storage power systems such as hydraulic power, thermal power, wind power and solar power stations, as well as many fields such as electric tools, electric bicycles, electric motorcycles, electric vehicles, military equipment, and aerospace. Due to the great development of secondary batteries, higher requirements have also been placed on the secondary batteries in terms of energy density, cycling performance, etc.

In the related art, a conductive undercoat layer is provided between the active material of the positive electrode plate and the current collector to improve one or more performances of the secondary battery.

In order to further improve the performance of the battery, a better positive electrode plate is required in the prior art.

### Summary of the Invention

In view of the above consideration, the present application provides a new positive electrode plate, a secondary battery and a power consuming device. The new positive electrode plate comprises a new positive electrode active material and a new conductive undercoat layer, which will be described respectively below.

In a first aspect, the present application provides a positive electrode plate, comprising a positive electrode current collector, a positive electrode film layer provided on at least one surface of the positive electrode current collector, and a conductive undercoat layer between the positive electrode current collector and the positive electrode film layer, wherein

the positive electrode film layer comprises a positive electrode active material of a chemical formula of $Li_aA_xMn_{1-y}B_yP_{1-z}C_zO_{4-n}D_n$, wherein A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, and D comprises one or more elements selected from S, F, Cl and Br; and a is selected from a range of 0.9 to 1.1, x is selected from a range of 0.001 to 0.1, y is selected from a range of 0.001 to 0.5, z is selected from a range of 0.001 to 0.1, and n is selected from a range of 0.001 to 0.1; the positive electrode active material is electrically neutral; and

the conductive undercoat layer includes a first polymer, a first water-based binder, and a first conductive agent, wherein

the first polymer comprises

a first monomeric unit represented by formula 1;

a second monomeric unit selected from at least one of a group consisting of a monomeric unit represented by formula 2 and a monomeric unit represented by formula 3;

a third monomeric unit selected from at least one of a group consisting of a monomeric unit represented by formula 4 and a monomeric unit represented by formula 5; and

a fourth monomeric unit represented by formula 6, in which $R^1$, $R^2$, and $R^3$ each independently represent H, a carboxyl, an ester group, and groups of substituted or unsubstituted C1-C10 alkyl, C1-C10 alkoxy, C2-C10 alkenyl, and C6-C10 aryl, and $R^4$ represents H, and groups of substituted or unsubstituted C1-C10 alkyl, C1-C10 alkoxy, C2-C10 alkenyl, and C6-C10 aryl;

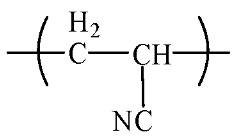

formula 1

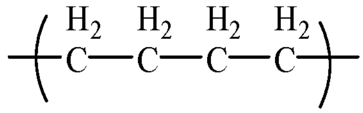

formula 2

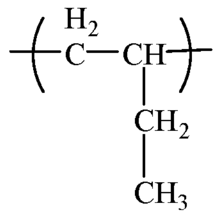

formula 3

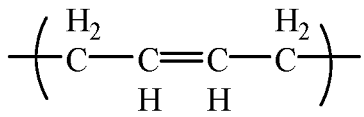

formula 4

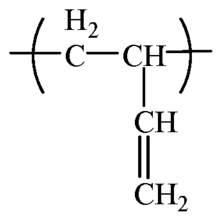

formula 5

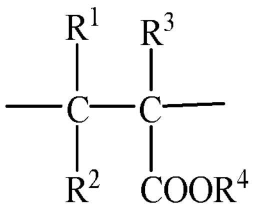

formula 6.

In some embodiments, based on the total mass of the first polymer,

the mass percentage content of the first monomeric unit is M1, and M1 is 10%-55%, optionally 25%-55%; and/or
the mass percentage content of the second monomeric unit is M2, and M2 is 40%-80%, optionally 50%-70%; and/or
the mass percentage content of the third monomeric unit is M3, and M3 is 0%-10%, optionally 0.001%-2%; and/or
the mass percentage content of the fourth monomeric unit is M4, and M4 is 0%-10%, optionally 0.1%-1%.

In some embodiments, M3/(M2 + M3) is 0%-5%, optionally 0.001%-1%.

In some embodiments, the first polymer is one or more selected from hydrogenated nitrile rubbers, and hydrogenated carboxylated nitrile rubbers; and/or
in some embodiments, the first polymer has a weight-average molecular weight of 50,000-1,500,000, optionally 200,000-400,000.

In some embodiments, the first water-based binder includes one or more selected from a water-based polyacrylic resin and a derivative thereof, a water-based amino-modified polypropylene resin and a derivative thereof, a polyvinyl alcohol and a derivative thereof, optionally a water-based acrylic acid-acrylate copolymer; and/or
the first water-based binder has a weight-average molecular weight of 200,000-1,500,000, optionally 300,000-400,000.

In some embodiments, the first conductive agent includes one or more selected from superconductive carbon, conductive graphite, acetylene black, carbon black, Ketjen black, carbon dots, carbon nanotubes, graphene, and carbon nanofibers, optionally one or more selected from carbon nanotubes, graphene, and carbon nanofibers.

In some embodiments, based on the total mass of the conductive undercoat layer,

the mass percentage content of the first polymer is X1, and X1 is 5%-20%, optionally 5%-10%; and/or
the mass percentage content of the first water-based binder is X2, and X2 is 30%-80%, optionally 40%-50%; and/or
the mass percentage content of the first conductive agent is X3, and X3 is 10%-50%, optionally 40%-50%.

In some embodiments, the conductive undercoat layer has a thickness of 1 μm-20 μm, optionally 3 μm-10 μm.

In some embodiments, the positive electrode film layer further includes one or more selected from an infiltration agent and a dispersant, optionally, the positive electrode film layer further includes both an infiltration agent and a dispersant.

In some embodiments, the infiltration agent has a surface tension of 20 mN/m-40 mN/m, optionally, the infiltration agent includes at least one of the functional groups of: - CN, $-NH_2$, -NH-, -N-, -OH, -COO-, -C(=O)-O-C(=O)-.

In some embodiments, the infiltration agent includes one or more selected from small molecule organic solvents and low molecular weight polymers.

In some embodiments, the small molecule organic solvent includes one or more selected from an alcohol amine compound, an alcohol compound, and a nitrile compound, and optionally, the alcohol amine compound has a number of carbon atom of 1-16, optionally 2-6.

In some embodiments, the low molecular weight polymer includes one or more selected from a maleic anhydride-styrene copolymer, polyvinylpyrrolidone, and polysiloxane, and optionally, the low molecular weight polymer has a weight-average molecular weight of not more than 6000, optionally 3000-6000.

In some embodiments, the dispersant includes a second polymer, and the second polymer comprises:

a fifth monomeric unit represented by formula 7;
a sixth monomeric unit selected from at least one of a group consisting of a monomeric unit represented by formula 8 and a monomeric unit represented by formula 9; and
a seventh monomeric unit selected from at least one of a group consisting of a monomeric unit represented by formula 10 and a monomeric unit represented by formula 11;

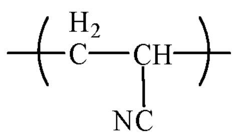

formula 7

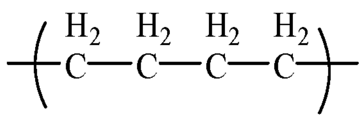

formula 8

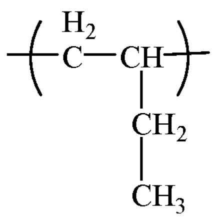

formula 9

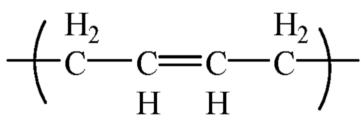

formula 10

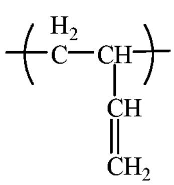

formula 11.

In some embodiments, based on the total mass of the second polymer,

the mass percentage content of the fifth monomeric unit is M5, and M5 is 10% - 55%, optionally 25% - 55%; and/or
the mass percentage content of the sixth monomeric unit is M6, and M6 is 40% - 80%, optionally 50% - 70%; and/or
the mass percentage content of the seventh monomeric unit is M7, and M7 is 0% - 10%, optionally 0.001% - 2%.

In some embodiments, M7/(M6 + M7) is 0% - 5%, optionally 0.001% - 1%.

In some embodiments, the second polymer is a hydrogenated nitrile rubber; and/or
the second polymer has a weight-average molecular weight of 50,000-500,000, optionally 150,000-350,000.

In some embodiments, based on the total mass of the positive electrode film layer,

the mass percentage content of the dispersant is Y1, and Y1 is 0.05% - 1%, optionally 0.1% - 0.5%; and/or
the mass percentage content of the infiltration agent is Y2, and Y2 is 0.05% - 2%, optionally 0.2% - 0.8%.

In some embodiments, Y1/Y2 is 0.05-20, optionally 0.1-1, further 0.3-0.8.

In some embodiments, in the positive electrode plate, the mass ratio of the first polymer to the second polymer is 1.5-5, optionally 2-3.

In some embodiments, A, C and D are each independently any element in the respective ranges, and B is at least two elements in the range thereof;

and optionally,
A is any element selected from Mg and Nb, and/or,
B is at least two elements selected from Fe, Ti, V, Co and Mg, and optionally Fe and one or more elements selected from Ti, V, Co and Mg, and/or
C is S, and/or,
D is F.

In some embodiments, x is selected from a range of 0.001 to 0.005; and/or

in some embodiments, y is selected from a range of 0.01 to 0.5, optionally in a range of 0.25 to 0.5; and/or
in some embodiments, z is selected from a range of 0.001 to 0.005; and/or
in some embodiments, n is selected from a range of 0.001 to 0.005.

In some embodiments, (1-y) : y is in a range of 1 to 4, optionally a range of 1.5 to 3, and a : x is in a range of 9 to 1100, optionally a range of 190 to 998.

In some embodiments, the lattice change rate of the positive electrode active material is not more than 8%, optionally not more than 4%.

In some embodiments, the Li/Mn antisite defect concentration of the positive electrode active material is 2% or less, optionally 0.5% or less.

In some embodiments, the surface oxygen valence state of the positive electrode active material is not more than -1.82, optionally -1.89 to -1.98.

In some embodiments, the compacted density of the positive electrode active material under 3 T is no less than 2.0 g/$cm^3$, optionally no less than 2.2 g/$cm^3$.

In some embodiments, the surface of the positive electrode active material is coated with carbon.

In some embodiments, the positive electrode active material has a specific surface area of 15 $m^2$/g-25 $m^2$/g, and the coating weight on one side of the positive electrode current collector is 20 mg/$cm^2$-40 mg/$cm^2$. When the positive electrode active material has a specific surface area of 15 $m^2$/g-25 $m^2$/g, and the coating weight on one side of the positive electrode current collector is 20 mg/$cm^2$-40 mg/$cm^2$, the film peeling phenomenon easily occurs during the coating process. In the present application, a new conductive undercoat layer is used to increase the bonding strength between the positive electrode active material layer and the current collector.

In a second aspect, the present application provides a secondary battery, including the positive electrode plate described in any one of the above embodiments.

In a third aspect, the present application provides a power consuming device, comprising the above secondary battery.

As a positive electrode active material of a lithium ion secondary battery, lithium manganese phosphate has a disadvantage of a poor rate performance when compared with other positive electrode active materials, and this problem is now usually solved by means of coating or doping, etc. However, it is still desirable to further improve the rate performance, cycle performance, high-temperature stability and the like of the lithium manganese phosphate positive electrode active material.

Through repeated studies on the effects of doping lithium manganese phosphate at Li, Mn, P and O-sites with various elements, the inventors of the present application have found that by use of simultaneous doping at the above four sites with specific amounts of specific elements, a markedly improved rate performance and improved cycle performance and/or high-temperature performance can be obtained, thereby obtaining an improved lithium manganese phosphate positive electrode active material.

The positive electrode active material of the present application can, for example, be used in a lithium ion secondary battery.

Specifically, in a fourth aspect, the present application provides a positive electrode active material of a chemical formula of $Li_aA_xMn_{1-y}B_yP_{1-z}C_zO_{4-n}D_n$,

wherein A comprises one or more elements selected from Zn, Al, Na, K, Mg, Nb, Mo and W,
B comprises one or more elements selected from Ti, V, Zr, Fe, Ni, Mg, Co, Ga, Sn, Sb, Nb and Ge,
C comprises one or more elements selected from B (boron), S, Si and N,
D comprises one or more elements selected from S, F, Cl and Br,
a is selected from a range of 0.9 to 1.1, for example, 0.97, 0.977, 0.984, 0.988, 0.99, 0.991, 0.992, 0.993, 0.994, 0.995, 0.996, 0.997, 0.998 and 1.01, x is selected from a range of 0.001 to 0.1, for example, 0.001 and 0.005, y is selected from a range of 0.001 to 0.5, for example, 0.001, 0.005, 0.02, 0.05, 0.1, 0.15, 0.2, 0.25, 0.3, 0.34, 0.345, 0.349, 0.35 and 0.4, z is selected from a range of 0.001 to 0.1, for example, 0.001, 0.005, 0.08 and 0.1, n is selected from a range of 0.001 to 0.1, for example, 0.001, 0.005, 0.08 and 0.1, and the positive electrode active material is electrically neutral.

Unless otherwise stated, in the above chemical formula, when A is a combination of at least two elements, the above definition of the numerical range of x not only represents a definition of the stoichiometric number of each element as A, but also represents a definition of the sum of the stoichiometric numbers of the elements as A. For example, when A is a combination of at least two elements A1, A2...An, the stoichiometric numbers x1, x2...xn of A1, A2...An each fall within the numerical range of x defined in the present application, and the sum of x1, x2...xn also falls within this numerical range. Similarly, when B, C and D are each a combination of at least two elements, the definitions of the numerical ranges of the stoichiometric numbers of B, C and D in the present application also have the above meanings.

The positive electrode active material of the present application is obtained by doping a compound $LiMnPO_4$ with elements, wherein A, B, C and D are respectively the elements for doping at Li, Mn, P and O sites of the compound $LiMnPO_4$. Without wishing to be bound by theory, it is now believed that a performance improvement of lithium manganese phosphate is associated with a reduction in the lattice change rate of lithium manganese phosphate in a lithium intercalation/de-intercalation process and a decrease in surface activity. A reduction in the lattice change rate can reduce the difference of lattice constants between two phases at a grain boundary, lower the interface stress and enhance the $Li^+$ transport ability at an interface, thereby improving the rate performance of the positive electrode active material. A high surface activity can easily lead to severe interfacial side reactions, and exacerbates gas production, electrolyte consumption and interface damage, thereby affecting the cycling performance and the like of the battery. In the present application, the lattice change rate is reduced by doping at the sites of Li and Mn. The Mn-position doping also effectively decreases the surface activity, thereby inhibiting the Mn dissolution and the interfacial side reactions between the positive electrode active material and the electrolyte. The P-site doping increases the change rate of the Mn-O bond length and reduces the small-polaron migration barrier of the material, which is beneficial for electronic conductivity. The O-site doping plays a good role in reducing the interfacial side reactions. The P-position and O-position doping also has an effect on the dissolution of Mn of antisite defects and the dynamic performance. Therefore, the doping reduces the antisite effect concentration in the material, improves the dynamic performance and gram capacity of the material, and can also change the particle morphology, thereby increasing the compacted density. The applicant has unexpectedly found that: by doping a compound $LiMnPO_4$ at Li, Mn, P and O-sites with specific amounts of specific elements, a markedly improved rate performance can be obtained while the dissolution of Mn and Mn-position doping element is significantly reduced, thereby obtaining significantly improved cycle performance and/or high-temperature stability; and the gram capacity and compacted density of the material can also be enhanced.

Optionally, A is one or more elements selected from Zn, Al, Na, K, Mg, Nb, Mo and W, B is one or more elements selected from Ti, V, Zr, Fe, Ni, Mg, Co, Ga, Sn, Sb, Nb and Ge, C is one or more elements selected from B (boron), S, Si and N, and D is one or more elements selected from S, F, Cl and Br.

In some embodiments, A, C and D are each independently any element in the above respective ranges, and B is at least two elements. Therefore, the composition of the positive electrode active material can be controlled more easily and accurately.

and optionally,
A is any element selected from Mg and Nb, and/or,
B is at least two elements selected from Fe, Ti, V, Co and Mg, and optionally Fe and one or more elements selected from Ti, V, Co and Mg, and/or
C is S, and/or,
D is F.

By selecting the Li-site doping element in the above ranges, the lattice change rate in a lithium de-intercalation process can be further reduced, thereby further improving the rate performance of the battery. By selecting the Mn-site doping element in the above ranges, the electronic conductivity can be further increased while the lattice change rate is further reduced, thereby improving the rate performance and gram capacity of the battery. By selecting the P-site doping element in the above ranges, the rate performance of the battery can be further improved. By selecting the O-site doping element in the above ranges, interfacial side reactions can be further alleviated, thereby improving the high-temperature performance of the battery.

In some embodiments, the x is selected from a range of 0.001 to 0.005; and/or, the y is selected from a range of 0.01 to 0.5, optionally a range of 0.25 to 0.5; and/or, the z is selected from a range of 0.001 to 0.005; and/or, the n is selected from a range of 0.001 to 0.005. By selecting the y value in the above ranges, the gram capacity and rate performance of the material can be further improved. By selecting the x value in the above ranges, the dynamic performance of the material can be further improved. By selecting the z value in the above ranges, the rate performance of the secondary battery can be further improved. By selecting the n value in the above ranges, the high-temperature performance of the secondary battery can be further improved.

In some embodiments, the positive electrode active material satisfies that: (1-y) : y is in a range of 1 to 4, optionally a range of 1.5 to 3, and a : x is in a range of 9 to 1,100, optionally a range of 190 to 998. Here, y denotes the sum of the stoichiometric numbers of the Mn-site doping elements. When the above conditions are satisfied, the energy density and cycling performance of the positive electrode active material can be further improved.

In some embodiments, the lattice change rate of the positive electrode active material is not more than 8%, optionally not more than 4%. By lowering the lattice change rate, the Li ion transport can be made easier, that is, the Li ions have a stronger migration ability in the material, which is beneficial in improving the rate performance of the secondary battery. The lattice change rate may be measured with a method known in the art, e.g., X-ray diffraction (XRD).

In some embodiments, the Li/Mn antisite defect concentration of the positive electrode active material is not more than 2%, optionally, the Li/Mn antisite defect concentration is not more than 0.5%. The so-called Li/Mn antisite defect means that the sites of $Li^+$ and $Mn^{2+}$ have been exchanged in the $LiMnPO_4$ lattices. The Li/Mn antisite defect concentration refers to a percentage of the $Li^+$ exchanged with $Mn^{2+}$ based on the total amount of $Li^+$ in the positive electrode active material. The $Mn^{2+}$ of antisite defects can hinder the transport of $Li^+$, and a reduction in the Li/Mn antisite defect concentration is beneficial in improving the gram capacity and rate performance of the positive electrode active material. The Li/Mn antisite defect concentration may be measured with a method known in the art, e.g., XRD.

In some embodiments, the surface oxygen valence state of the positive electrode active material is not more than -1.82, optionally -1.89 to -1.98. By lowering the surface oxygen valence state, the interfacial side reactions between the positive electrode active material and an electrolyte can be alleviated, thereby improving the cycling performance and high-temperature stability of the secondary battery. The surface oxygen valence state may be measured with a method known in the art, e.g., electron energy loss spectroscopy (EELS).

In some embodiments, the compacted density of the positive electrode active material under 3 T (ton) is not less than 2.0 $g/cm^3$, optionally not less than 2.2 $g/cm^3$. A higher compacted density indicates a greater weight of the active material per unit volume, and thus, increasing the compacted density is beneficial in increasing the volumetric energy density of a cell. The compacted density may be measured in accordance with GB/T 24533-2009.

In some embodiments, the surface of the positive electrode active material is coated with carbon. Therefore, the electrical conductivity of the positive electrode active material can be improved.

Beneficial Effects

One or more embodiments of the present application have one or more of the following beneficial effects:

(1) in one or more solutions of the present application, simultaneously doping lithium manganese phosphate at four sites of Li-, Mn-, P- and O--sites with specific amounts of specific elements can results in the significantly improved rate performance and improved cycling performance and/or high-temperature stability, thereby obtaining a new doping-modified positive electrode active material.

(2) When the BET specific surface area of the positive electrode active material is large and there are many small particles, which easily results in a weaker bonding strength between the positive electrode active material and the current collector (aluminum foil), and the film peeling phenomenon occurring during the coating process. In the present application, a new conductive undercoat layer is used to increase the bonding strength between the positive electrode active material layer and the current collector.

(3) During the process of coating the surface of the conductive undercoat layer with the positive electrode active material slurry (containing a solvent of N-methylpyrrolidone, referred to as NMP), the first polymer in the conductive undercoat layer will dissolve again after coming into the contact with the solvent of NMP, so as to interdiffuse with the positive electrode active material slurry, and after curing, the active material layer can be integrated with the

undercoat layer, thereby effectively increasing the bonding strength between the positive electrode film layer and the positive electrode current collector.

(4) When acrylic acid-acrylate copolymer (weight-average molecular weight: 200,000-1,500,000) is used as the first water-based binder in the conductive undercoat layer, the binder having a relatively strong polarity can achieve good adhesion to the current collector (aluminum foil). In addition, the acrylic acid-acrylate copolymer has good stability in the electrolyte, high temperature resistance, corrosion resistance, and a electrolyte-absorbing low efficiency (low swelling degree).

(3) When the conductive agent in the conductive undercoat layer is one or two selected from carbon black, acetylene black, carbon fibers, graphite, and carbon nanotubes, the interface resistance can be reduced, the charge/discharge rate performance of the battery can be improved, and the cycle life of the battery is prolonged.

Brief Description of the Drawings

Fig. 1 is a schematic diagram of a positive electrode plate according to one embodiment of the present application.
Fig. 2 is a schematic flow diagram of the measurement of the adhesive force of an electrode plate in one embodiment of the present application.
Fig. 3 is a schematic diagram of a secondary battery according to an embodiment of the present application.
Fig. 4 is an exploded view of a secondary battery according to an embodiment of the present application as shown in Fig. 3.
Fig. 5 is a schematic diagram of a battery module according to an embodiment of the present application.
Fig. 6 is a schematic diagram of a battery pack according to an embodiment of the present application.
Fig. 7 is an exploded view of a battery pack according to an embodiment of the present application as shown in Fig. 6.
Fig. 8 is a schematic diagram of a power consuming device using a secondary battery according to an embodiment of the present application as a power source.
Fig. 9 shows XRD patterns of undoped $LiMnPO_4$ and a positive electrode active material prepared in example 2.
Fig. 10 shows an EDS (X-ray spectroscopy) diagram of a positive electrode active material prepared in example 2.

List of reference signs:

1 battery pack; 2 upper box body; 3 lower box body; 4 battery module; 5 secondary battery; 51 housing; 52 electrode assembly; 53 top cover assembly; 11 positive electrode current collector; 112 surface; 12 conductive undercoat layer; 13 positive electrode film layer; 510 steel plate; 520 double-sided tape; 530 electrode plate;

Detailed Description of Embodiments

Hereinafter, embodiments of a positive electrode active material and a preparation method therefor, a positive electrode plate, a negative electrode plate, a secondary battery, a battery module, a battery pack, and a device of the present application are described in detail and specifically disclosed with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of $\geq 2$, it is equivalent to disclosing that the parameter is, for example, an integer of 2, 3, 4, 5, 6, 7, 8, 9, 10, 11, 12, and the like.

All the implementations and optional implementations of the present application can be combined with one

another to form new technical solutions, unless otherwise stated.

All technical features and optional technical features of the present application can be combined with one another to form a new technical solution, unless otherwise stated.

Unless otherwise stated, all the steps of the present application can be carried out sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), etc.

The terms "comprise" and "include" mentioned in the present application are openended or closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, a condition "A or B" is satisfied by any one of the following: A is true (or present) and B is false (or not present); A is false (or not present) and B is true (or present); or both A and B are true (or present).

[Secondary battery]

A secondary battery, also known as a rechargeable battery or an accumulator, refers to a battery of which active materials can be activated by means of charging for reuse of the battery after the battery is discharged.

Generally, the secondary battery comprises a positive electrode plate, a negative electrode plate, a separator and an electrolyte. During a charge/discharge process of the battery, active ions (e.g., lithium ions) are intercalated and de-intercalated back and forth between the positive electrode plate and the negative electrode plate. The separator is provided between the positive electrode plate and the negative electrode plate, and mainly prevents positive and negative electrodes from short-circuiting and enables the active ions to pass through. The electrolyte is provided between the positive electrode plate and the negative electrode plate and mainly functions for active ion conduction.

[Positive electrode plate]

In some embodiments, the present application provides a positive electrode plate, comprising a positive electrode current collector, a positive electrode film layer provided on at least one surface of the positive electrode current collector, and a conductive undercoat layer between the positive electrode current collector and the positive electrode film layer, wherein

the positive electrode film layer comprises a positive electrode active material of a chemical formula of $Li_aA_xMn_{1-y}B_yP_{1-z}C_zO_{4-n}D_n$, wherein A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, and D comprises one or more elements selected from S, F, Cl and Br; a is selected from a range of 0.9 to 1.1, x is selected from a range of 0.001 to 0.1, y is selected from a range of 0.001 to 0.5, z is selected from a range of 0.001 to 0.1, and n is selected from a range of 0.001 to 0.1; and the positive electrode active material is electrically neutral; and

the conductive undercoat layer includes a first polymer, a first water-based binder, and a first conductive agent, wherein

the first polymer comprises

a first monomeric unit represented by formula 1;

a second monomeric unit selected from at least one of a group consisting of a monomeric unit represented by formula 2 and a monomeric unit represented by formula 3;

a third monomeric unit selected from at least one of a group consisting of a monomeric unit represented by formula 4 and a monomeric unit represented by formula 5; and

a fourth monomeric unit represented by formula 6, in which $R^1$, $R^2$, and $R^3$ each independently represent H, a carboxyl, an ester group, and groups of substituted or unsubstituted C1-C10 alkyl, C1-C10 alkoxy, C2-C10 alkenyl, and C6-C10 aryl, and $R^4$ represents H, and groups of substituted or unsubstituted C1-C10 alkyl, C1-C10 alkoxy, C2-C10 alkenyl, and C6-C10 aryl;

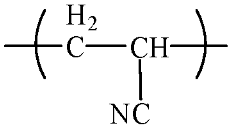

formula 1

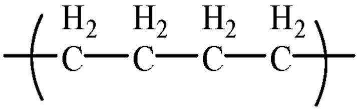

formula 2

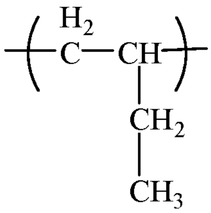

formula 3

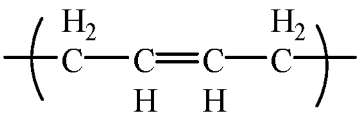

formula 4

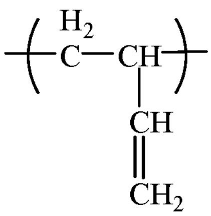

formula 5

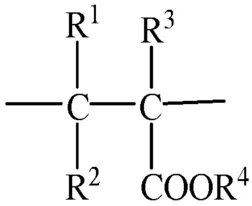

formula 6.

In the positive electrode plate based on the above solution, the bonding strength between the positive electrode film layer and the positive electrode current collector is enhanced. Without being limited by theory, during the process of coating the surface of the conductive undercoat layer with the positive electrode active material slurry (containing a solvent of N-methylpyrrolidone, referred to as NMP), the first polymer in the conductive undercoat layer will dissolve again after coming into the contact with the solvent of NMP, so as to interdiffuse with the positive electrode active material slurry, and after curing, the active material layer can be integrated with the undercoat layer, thereby effectively increasing the bonding strength between the positive electrode film layer and the positive electrode current collector.

In some embodiments, the first polymer is a random copolymer.

Nitrile rubber (NBR) is a random copolymer formed by polymerization (such as emulsion polymerization) of acrylonitrile and butadiene monomers, and has a general structure of:

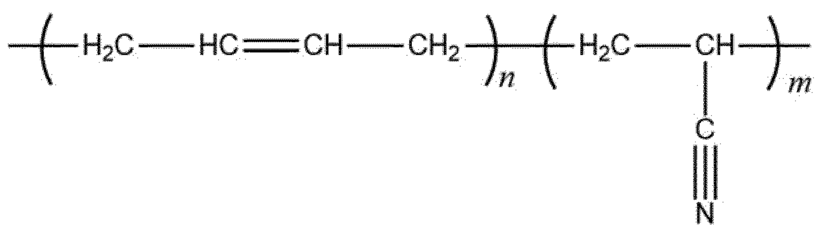

In the nitrile rubber, butadiene (B) and acrylonitrile (A) segments are generally linked by BAB, BBA or ABB, ABA and BBB tridas, but with the increase of acrylonitrile content, there are also AABAA linked in pentad and even as a bulk acrylonitrile polymer. In the nitrile rubber, the sequence distribution of butadiene is mainly in a trans-1,4 structure, and the microstructure thereof depends on the polymerization conditions.

A hydrogenated nitrile rubber (HNBR) refers to the product obtained by hydrogenating the carbon-carbon double bonds on the molecular chain of a nitrile rubber to partial or full saturation. The chemical formula of fully saturated hydrogenated nitrile rubber is as follows:

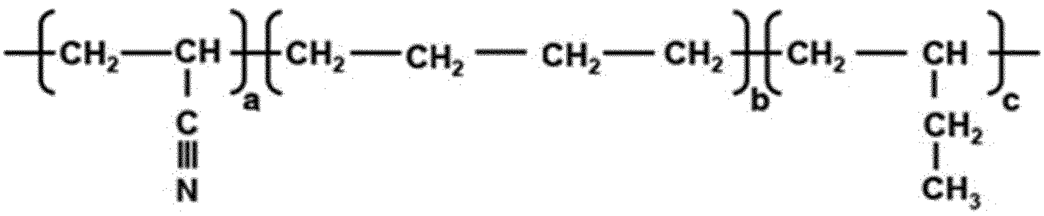

There are three main methods for the preparation of a hydrogenated nitrile rubber (HNBR): an ethylene-acrylonitrile copolymerization method, an NBR solution hydrogenation method and an NBR emulsion hydrogenation method.

A hydrogenated carboxybutyl rubber (HXNBR) is a polymer formed by copolymerization of nitrile (such as acrylonitrile), a conjugated diene (such as butadiene) and an ester of an unsaturated carboxylic acid, followed by selective hydrogenation of C=C. The so-called hydrogenated carboxyl butyl rubber is based on hydrogenated nitrile rubber, to which a carboxyl group is further introduced.

The ester of an unsaturated carboxylic acids includes, for example, an ester of a α,β-unsaturated monocarboxylic acid. Esters of α,β-unsaturated monocarboxylic acids that can be used are alkyl esters and alkoxyalkyl esters thereof, optionally, alkyl esters of α,β-unsaturated monocarboxylic acids, such as C1-C18 alkyl esters, optionally alkyl esters of acrylic acid or methacrylic acid, such as C1-C18 alkyl esters, specifically for example, methyl acrylate, ethyl acrylate, propyl acrylate, n-butyl acrylate, tert-butyl acrylate, 2-ethylhexyl acrylate, n-dodecyl acrylate, methyl methacrylate, ethyl methacrylate, butyl methacrylate and 2-ethylhexyl methacrylate; and also optionally alkoxyalkyl esters of α,β-unsaturated monocarboxylic acids, optionally alkoxyalkyl esters of acrylic acid or methacrylic acid, e.g., C2-C12-alkoxyalkyl esters of acrylic acid or methacrylic acid, and further optionally methoxymethyl acrylate, methoxyethyl (meth)acrylate, ethoxyethyl (meth)acrylate, and methoxyethyl (meth)acrylate. Mixtures of alkyl esters such as those described above with alkoxyalkyl esters such as those described above may also be used. Hydroxyalkyl acrylate and hydroxyalkyl methacrylate in which the number of carbon atoms in the hydroxyalkyl group is 1-12 can also be used, for example 2-hydroxyethyl acrylate, 2-hydroxyethyl methacrylate and 3-hydroxypropyl acrylate. Likewise, epoxy-containing esters such as glycidyl methacrylate may be used. Cyanoalkyl acrylates and cyanoalkyl methacrylates with 2-12 C atoms in the cyanoalkyl can also be used, for example α-cyanoethyl acrylate, β-cyanoethyl acrylate and cyanobutyl methacrylate. Acrylates or methacrylates containing fluorine-substituted benzyl groups can also be used, for example, fluorobenzyl acrylate and fluorobenzyl methacrylate. Acrylates and methacrylates containing fluoroalkyl groups can also be used, for example trifluoroethyl acrylate and tetrafluoropropyl methacrylate. Amino group-containing α,β-unsaturated carboxylic acid esters such as dimethylaminomethyl acrylate and diethylaminoethyl acrylate can also be used.

In some embodiments, based on the total mass of the first polymer,

the mass percentage content of the first monomeric unit is M1, and M1 is 10%-55%, optionally 25%-55%; and/or the mass percentage content of the second monomeric unit is M2, and M2 is 40%-80%, optionally 50%-70%; and/or the mass percentage content of the third monomeric unit is M3, and M3 is 0%-10%, optionally 0.001%-2%; and/or the mass percentage content of the fourth monomeric unit is M4, and M4 is 0%-10%, optionally 0.1%-1%. The positive electrode plate based on this solution is used in secondary batteries, where one or more of the properties of the secondary battery are significantly improved. The conductive undercoat layer based on this solution can be appropriately dissolved during the coating process, and in turn forms enhanced bonding with the positive electrode

film layer.

In some embodiments, based on the total mass of the first polymer,

The mass percentage content of the first monomeric unit is M1, and M1 is 10%-55%, optionally 10%-15%, 15%-20%, 20%-25%, 25%-30% , 30%-35%, 35%-40%, 40%-45%, 45%-50% or 50%-55%; and/or

the mass percentage content of the second monomeric unit is M2, and M2 is 40%-80%, optionally 40%-45%, 45%-50%, 50%-55%, 55%-60% , 60%-65%, 65%-70%, 70%-75% or 75%-80%; and/or
the mass percentage content of the third monomeric unit is M3, M3 is 0%-10%, optionally 0.001%-1%, 1%-2%, 2%-3%, 3%-4% , 4%-5%, 5%-6%, 6%-7%, 7%-8%, 8%-9% or 9%-10%; and/or
the mass percentage content of the fourth monomeric unit is M4, and M4 is 0%-10%, optionally 0.01%-1%, 1%-2%, 2%-3%, 3%-4% , 4%-5%, 5%-6%, 6%-7%, 7%-8%, 8%-9% or 9%-10% . The positive electrode plate based on this solution is used in secondary batteries, where one or more of the properties of the secondary battery are significantly improved. The conductive undercoat layer based on this solution can be appropriately dissolved during the coating process, and in turn forms enhanced bonding with the positive electrode film layer.

In some embodiments, M3/(M2 + M3) is 0%-5%, optionally 0.001%-1%. The positive electrode plate based on this solution is used in secondary batteries, where one or more of the properties of the secondary battery are significantly improved.

In some embodiments, M3/(M2 + M3) is 0.01%-1%, 1%-2%, 2%-3%, 3%-4% or 4%-5%.

In some embodiments, the first polymer is one or more selected from hydrogenated nitrile rubbers, and hydrogenated carboxylated nitrile rubbers; and/or
in some embodiments, the first polymer has a weight-average molecular weight of 50,000 - 1,500,000, optionally 200,000 - 400,000. The positive electrode plate based on this solution is used in secondary batteries, where one or more of the properties of the secondary battery are significantly improved.

In some embodiments, the first polymer has a weight-average molecular weight of 100,000-300,000, 300,000-500,000, 500,000-700,000, 700,000-900,000, 900,000-1,100,000, 1,100,000-1,300,000 or 1,300,000-1,500,000.

In some embodiments, the first water-based binder includes one or more selected from a water-based polyacrylic resin and a derivative thereof, a water-based amino-modified polypropylene resin and a derivative thereof, a polyvinyl alcohol and a derivative thereof, optionally a water-based acrylic acid-acrylate copolymer; and/or
the first water-based binder has a weight-average molecular weight of 200,000-1,500,000, optionally 300,000-400,000. The positive electrode plate based on this solution is used in secondary batteries, where one or more of the properties of the secondary battery are significantly improved.

In some embodiments, the weight-average molecular weight of the first water-based binder is 100,000-300,000, 300,000-500,000, 500,000-700,000, 700,000-900,000, 900,000-1,100,000, or 1,100,000-1,300,000.

In some embodiments, the first conductive agent includes one or more selected from superconductive carbon, conductive graphite, acetylene black, carbon black, Ketjen black, carbon dots, carbon nanotubes, graphene, and carbon nanofibers, optionally one or more selected from carbon nanotubes, graphene, and carbon nanofibers. The positive electrode plate based on this solution is used in secondary batteries, where one or more of the properties of the secondary battery are significantly improved.

In some embodiments, based on the total mass of the conductive undercoat layer,

the mass percentage content of the first polymer is X1, and X1 is 5%-20%, optionally 5%-10%; and/or
the mass percentage content of the first water-based binder is X2, and X2 is 30%-80%, optionally 40%-50%; and/or
the mass percentage content of the first conductive agent is X3, and X3 is 10%-50%, optionally 40%-50%. The positive electrode plate based on this solution is used in secondary batteries, where one or more of the properties of the secondary battery are significantly improved.

In some embodiments, the conductive undercoat layer has a thickness of 1 μm-20 μm, optionally 3 μm-10 μm. The positive electrode plate based on this solution is used in secondary batteries, where one or more of the properties of the secondary battery are significantly improved.

In some embodiments, the positive electrode film layer further includes one or more selected from an infiltration agent and a dispersant, optionally, the positive electrode film layer further includes both an infiltration agent and a dispersant. The positive electrode plate based on this solution is used in secondary batteries, where one or more of the properties of the secondary battery are significantly improved.

In some embodiments, the infiltration agent has a surface tension of 20 mN/m-40 mN/m, optionally, the infiltration agent includes at least one of the functional groups of: - CN, $-NH_2$, -NH-, -N-, -OH, -COO-, -C(=O)-O-C(=O)-.

In some embodiments, the surface tension can be measured using the Wilhelmy Plate Method. For the specific test steps, reference can be made to general standards in the field, such as GBT/22237-2008 Surface Active Agents-Determination of Surface Tension, such as ASTM D1331-14. Standard Test Methods for Surface and Interfacial Tension of Solutions of Paints Solvents Solutions of Surface-Active Agents and Related Materials.

In some embodiments, the infiltration agent includes one or more selected from small molecule organic solvents and low molecular weight polymers. The positive electrode plate based on this solution is used in secondary batteries, where one or more of the properties of the secondary battery are significantly improved.

In some embodiments, the small molecule organic solvent includes one or more selected from an alcohol amine compound, an alcohol compound, and a nitrile compound, and optionally, the alcohol amine compound has a number of carbon atom of 1-16, optionally 2-6;

In some embodiments, the low molecular weight polymer includes one or more selected from a maleic anhydride-styrene copolymer, polyvinylpyrrolidone, and polysiloxane, and optionally, the low molecular weight polymer has a weight-average molecular weight of not more than 6000, optionally 3000-6000. The positive electrode plate based on this solution is used in secondary batteries, where one or more of the properties of the secondary battery are significantly improved.

In some embodiments, the dispersant includes a second polymer, and the second polymer comprises:

a fifth monomeric unit represented by formula 7;
a sixth monomeric unit selected from at least one of a group consisting of a monomeric unit represented by formula 8 and a monomeric unit represented by formula 9; and
a seventh monomeric unit selected from at least one of a group consisting of a monomeric unit represented by formula 10 and a monomeric unit represented by formula 11;

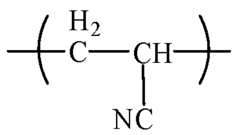

formula 7

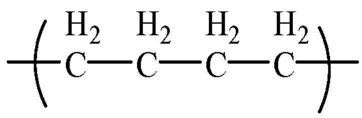

formula 8

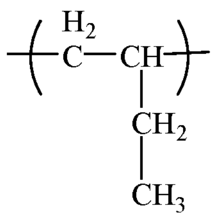

formula 9

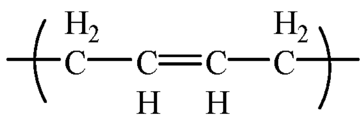

formula 10

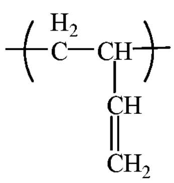

formula 11.

The positive electrode plate based on this solution is used in secondary batteries, where one or more of the properties of the secondary battery are significantly improved.

In some embodiments, based on the total mass of the second polymer,

the mass percentage content of the fifth monomeric unit is M5, and M5 is 10% - 55%, optionally 25% - 55%; and/or
the mass percentage content of the sixth monomeric unit is M6, and M6 is 40% - 80%, optionally 50% - 70%; and/or
the mass percentage content of the seventh monomeric unit is M7, and M7 is 0% - 10%, optionally 0.001% - 2%. The positive electrode plate based on this solution is used in a secondary batteries, where one or more properties of the secondary battery are significantly improved.

In some embodiments, based on the total mass of the second polymer,

the mass percentage content of the fifth monomeric unit is M5, and M5 is 10%-55%, optionally 10%-15%, 15%-20%, 20%-25%, 25%-30% , 30%-35%, 35%-40%, 40%-45%, 45%-50% or 50%-55%; and/or
the mass percentage content of the sixth monomeric unit is M6, and M6 is 40%-80%, optionally 40%-45%, 45%-50%, 50%-55%, 55%-60% , 60%-65%, 65%-70%, 70%-75% or 75%-80%; and/or
the mass percentage content of the seventh monomeric unit is M7, and M7 is 0%-10%, optionally 0.01%-1%, 1%-2%, 2%-3%, 3%-4% , 4%-5%, 5%-6%, 6%-7%, 7%-8%, 8%-9% or 9%-10%.

In some embodiments, M7/(M6 + M7) is 0% - 5%, optionally 0.001% - 1%.
In some embodiments, the second polymer is a hydrogenated nitrile rubber; and/or
the second polymer has a weight-average molecular weight of 50,000-500,000, optionally 150,000-350,000. The positive electrode plate based on this solution is used in secondary batteries, where one or more of the properties of the secondary battery are significantly improved.
In some embodiments, based on the total mass of the positive electrode film layer,

the mass percentage content of the dispersant is Y1, and Y1 is 0.05% - 1%, optionally 0.1% - 0.5%; and/or
the mass percentage content of the infiltration agent is Y2, and Y2 is 0.05% - 2%, optionally 0.2% - 0.8%. The positive electrode plate based on this solution is used in secondary batteries, where one or more of the properties of the secondary battery are significantly improved.

In some embodiments, Y1/Y2 is 0.05-20, optionally 0.1-1, further 0.3-0.8. The positive electrode plate based on this solution is used in secondary batteries, where one or more of the properties of the secondary battery are significantly improved.
In some embodiments, in the positive electrode plate, the mass ratio of the first polymer to the second polymer is 1.5-5, optionally 2-3. The positive electrode plate based on this solution is used in secondary batteries, where one or more of the properties of the secondary battery are significantly improved.
In some embodiments, A, C and D are each independently any element in the respective ranges, and B is at least two elements in the range thereof;

and optionally,
A is any element selected from Mg and Nb, and/or,
B is at least two elements selected from Fe, Ti, V, Co and Mg, and optionally Fe and one or more elements selected from Ti, V, Co and Mg, and/or
C is S, and/or,
D is F. The positive electrode plate based on this solution is used in secondary batteries, where one or more of the properties of the secondary battery are significantly improved.

In some embodiments, x is selected from a range of 0.001 to 0.005; and/or

in some embodiments, y is selected from a range of 0.01 to 0.5, optionally in a range of 0.25 to 0.5; and/or
in some embodiments, z is selected from a range of 0.001 to 0.005; and/or
in some embodiments, n is selected from a range of 0.001 to 0.005. The positive electrode plate based on this solution is used in secondary batteries, where one or more of the properties of the secondary battery are significantly improved.

In some embodiments, (1-y) : y is in a range of 1 to 4, optionally a range of 1.5 to 3, and a : x is in a range of 9 to 1,100, optionally a range of 190 to 998. The positive electrode plate based on this solution is used in secondary batteries, where one or more of the properties of the secondary battery are significantly improved.
In some embodiments, the lattice change rate of the positive electrode active material is not more than 8%, optionally not more than 4%. The positive electrode plate based on this solution is used in secondary batteries, where one or more of the properties of the secondary battery are significantly improved.

In some embodiments, the Li/Mn antisite defect concentration of the positive electrode active material is 2% or less, optionally 0.5% or less. The positive electrode plate based on this solution is used in secondary batteries, where one or more of the properties of the secondary battery are significantly improved.

In some embodiments, the surface oxygen valence state of the positive electrode active material is not more than -1.82, optionally -1.89 to -1.98. The positive electrode plate based on this solution is used in secondary batteries, where one or more of the properties of the secondary battery are significantly improved.

In some embodiments, the compacted density of the positive electrode active material under 3 T is not less than 2.0 g/cm$^3$, optionally not less than 2.2 g/cm$^3$. The positive electrode plate based on this solution is used in secondary batteries, where one or more of the properties of the secondary battery are significantly improved.

In some embodiments, the surface of the positive electrode active material is coated with carbon. The positive electrode plate based on this solution is used in secondary batteries, where one or more of the properties of the secondary battery are significantly improved.

In some embodiments, a method for preparing a positive electrode active material comprises the following steps:

step (1): a manganese source, a source of an element B and an acid are dissolved and stirred in a solvent to generate a suspension of an element B-doped manganese salt, the suspension is filtered, and the resultant filter cake is dried, to obtain the element B-doped manganese salt;

step (2): a lithium source, a phosphorus source, a source of an element A, a source of an element C and a source of an element D, a solvent and the element B-doped manganese salt obtained in step (1) are added into a reaction container, and ground and mixed to obtain a slurry;

step (3): the slurry obtained in step (2) is transferred into a spray drying apparatus for spray-drying granulation, to obtain particles; and

step (4): sintering the resulting particles from step (3), to obtain an inner core of $Li_aA_xMn_{1-y}B_yP_{1-z}C_zO_{4-n}D_n$, wherein, A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, and D comprises one or more elements selected from S, F, Cl and Br, a is selected from a range of 0.9 to 1.1, x is selected from a range of 0.001 to 0.1, y is selected from a range of 0.001 to 0.5, z is selected from a range of 0.001 to 0.1, n is selected from a range of 0.001 to 0.1, and the inner core is electrically neutral.

In some embodiments, the stirring of step (1) is carried out at a temperature in a range of 60°C to 120°C, and/or, the stirring of step (1) is carried out at a stirring speed of 200 to 800 rpm.

In some embodiments, the source of an element A is selected from at least one of the elementary substance, oxide, phosphate, oxalate, carbonate and sulfate of the element A, the source of an element B is selected from at least one of the elementary substance, oxide, phosphate, oxalate, carbonate and sulfate of the element B, the source of an element C is selected from at least one of the sulfate, borate, nitrate and silicate of the element C, and the source of an element D is selected from at least one of the elementary substance and an ammonium salt of the element D.

In some embodiments, the grinding and mixing of step (2) are carried out for 8 to 15 h.

In some embodiments, the sintering of step (4) is carried out in a temperature range of 600°C to 900°C for 6 to 14 h.

In some embodiments, the present application provides a secondary battery, comprising the positive electrode plate according to any one of the above embodiments.

In some embodiments, the present application provides a power consuming device comprising the above secondary battery.

The positive electrode plate generally includes a positive electrode current collector and a positive electrode film layer provided on at least one surface of the positive electrode current collector, the positive electrode film layer including a positive electrode active material.

Fig. 1 shows a schematic diagram of a positive electrode plate of an embodiment. As shown in the figure, a positive electrode plate, comprises a positive electrode current collector 11, a positive electrode film layer 13 provided on at least one surface 112 of the positive electrode current collector 11, and a conductive undercoat layer 12 between the positive electrode current collector 11 and the positive electrode film layer 13.

As an example, the positive electrode current collector has two surfaces opposite in its own thickness direction, and the positive electrode film layer is provided on either or both of opposite surfaces of the positive electrode current collector.

In some embodiments, the positive current collector can be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene

terephthalate (PET), polybutylene terephthalate (PBT), polystyrene (PS), polyethylene (PE), etc.).

In some embodiments, the positive electrode film layer may optionally comprise a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry, followed by the procedures such as drying and cold pressing, so as to obtain the positive electrode plate.

[Negative electrode plate]

The negative electrode plate comprises a negative electrode current collector and a negative electrode film layer provided on at least one surface of the negative electrode current collector, the negative electrode film layer comprising a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or in combination of two or more.

In some embodiments, the negative electrode film layer may optionally comprise a binder. As an example, the binder may be selected from at least one of a styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may optionally comprise a conductive agent. As an example, the conductive agent may be selected from at least one of superconductive carbon, acetylene black, carbon black, ketjenblack, carbon dots, carbon nanotubes, graphene, and carbon nanofibers.

In some embodiments, the negative electrode film layer may optionally comprise other auxiliary agents, such as thickener (e.g. sodium carboxymethyl cellulose (CMC-Na)) and the like.

In some embodiments, the negative electrode plate can be prepared as follows: dispersing the above-mentioned components for preparing the negative electrode plate, such as negative electrode active material, conductive agent, binder and any other components, in a solvent (e.g. deionized water) to form a negative electrode slurry; and coating a negative electrode current collector with the negative electrode slurry, followed by procedures such as drying and cold pressing, so as to obtain the negative electrode plate.

[Electrolyte]

The electrolyte functions to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some embodiments, the electrolyte is liquid and includes an electrolyte salt and a solvent.

In some embodiments, the electrolyte salt may be selected from at least one of lithium hexafluorophosphate,

lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte further optionally comprises an additive. As an example, the additive may include a negative electrode film-forming additive and a positive electrode film-forming additive, and may further include an additive that can improve some performance of the battery, such as an additive that improves overcharge performance of the battery, or an additive that improves high-temperature performance or low-temperature performance of the battery.

[Separator]

In some embodiments, the secondary battery further comprises a separator. The type of the separator is not particularly limited in the present application, and any well known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package can be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may include polypropylene, polybutylene terephthalate, polybutylene succinate, etc.

The shape of the secondary battery is not particularly limited in the present application, and may be cylindrical, square or of any other shape. For example, Fig. 3 shows a secondary battery 5 with a square structure as an example.

In some embodiments, with reference to Fig. 4, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can be subjected to a winding process or a stacking process to form an electrode assembly 52. The electrode assembly 52 is encapsulated in the accommodating cavity. The electrolyte infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

Fig. 5 is an exemplary battery module 4. Referring to Fig. 5, in the battery module 4, a plurality of secondary batteries 5 may be sequentially arranged in the length direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

Fig. 6 and Fig. 7 show an exemplary battery pack 1. Referring to Fig. 6 and Fig. 7, the battery pack 1 may comprise a battery case and a plurality of battery modules 4 provided in the battery case. The battery box comprises an upper box body 2 and a lower box body 3, wherein the upper box body 2 can cover the lower box body 3 to form a closed space for accommodating the battery modules 4. A plurality of battery modules 4 may be arranged in the battery

case in any manner.

In addition, the present application further provides a power consuming device. The power consuming device comprises at least one of the secondary battery, battery module, or battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the secondary battery, battery module or battery pack can be selected according to the usage requirements thereof.

Fig. 8 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a secondary battery, a battery pack or a battery module may be used.

Specific examples of new positive electrode active material

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

I. Preparation of secondary battery

Example 1

1) Preparation of a positive electrode active material

Preparation of doped manganese oxalate: 1.3 mol of $MnSO_4{\cdot}H_2O$ and 0.7 mol of $FeSO_4{\cdot}H_2O$ are mixed thoroughly for 6 hours in a mixer. The mixture is transferred into a reaction kettle, and 10 L of deionized water and 2 mol of oxalic acid dihydrate (in oxalic acid) are added. The reaction kettle is heated to 80°C, stirring is performed for 6 hours at a rotation speed of 600 rpm, and the reaction is completed (no bubbles are generated), so as to obtain an Fe-doped manganese oxalate suspension. Then, the suspension is filtered, and the resultant filter cake is dried at 120°C and then ground, so as to obtain Fe-doped manganese oxalate particles with a median particle size $Dv_{50}$ of about 100 nm.

Preparation of doped lithium manganese phosphate: 1 mol of the above manganese oxalate particles, 0.497 mol of lithium carbonate, 0.001 mol of $Mo(SO_4)_3$, an 85% aqueous phosphoric acid solution containing 0.999 mol of phosphoric acid, 0.001 mol of $H_4SiO_4$, 0.0005 mol of $NH_4HF_2$, and 0.005 mol of sucrose are added into 20 L of deionized water. The mixture is transferred into a sander and thoroughly ground and stirred for 10 hours to obtain a slurry. The slurry is transferred into a spray drying apparatus for spray-drying granulation, where the drying temperature is set at 250°C and the drying time is 4 h, so as to obtain particles. The above powder is sintered at 700°C for 10 hours in a protective atmosphere of nitrogen (90% by volume) + hydrogen (10% by volume), so as to obtain carbon-coated $Li_{0.994}Mo_{0.001}Mn_{0.65}Fe_{0.35}P_{0.999}Si_{0.001}O_{3.999}F_{0.001}$. The positive electrode active material may be tested for element content using inductively coupled plasma (ICP) emission spectroscopy.

2) Preparation of button battery

The above positive electrode active material, polyvinylidene fluoride (PVDF) and acetylene black in a weight ratio of 90 : 5 : 5 are added into N-methylpyrrolidone (NMP), and stirred in a drying room to make a slurry. An aluminum foil is coated with the above slurry, followed by drying and cold pressing, so as to obtain a positive electrode plate. The positive electrode film layer has a single-side surface density of 0.02 g/cm$^2$ and a compacted density of 2.0 g/cm$^3$.

A lithium plate is used as a negative electrode, a solution of 1 mol/L $LiPF_6$ in ethylene carbonate (EC), diethyl carbonate (DEC) and dimethyl carbonate (DMC) in a volume ratio of 1 : 1 : 1 is used as an electrolyte, and the lithium plate and the electrolyte are assembled, together with the positive electrode plate prepared above, into a button battery in a button battery box.

3) Preparation of full battery

The above positive electrode active material is uniformly mixed with a conductive agent acetylene black and a binder polyvinylidene fluoride (PVDF) in a weight ratio of 92 : 2.5 : 5.5 in an N-methylpyrrolidone solvent system, and the mixture is applied to an aluminum foil, followed by drying and cold pressing, so as to form a positive electrode film layer, to obtain a positive electrode plate. The positive electrode film layer has a single-side surface density of 0.04 $g/cm^2$ and a compacted density of 2.4 $g/cm^3$.

Negative electrode active materials artificial graphite and hard carbon, a conductive agent acetylene black, a binder styrene butadiene rubber (SBR) and a thickening agent sodium carboxymethylcellulose (CMC) are uniformly mixed in deionized water in a weight ratio of 90 : 5 : 2 : 2 : 1, and the mixture is applied to a copper foil, followed by drying and cold pressing, so as to form a negative electrode film layer, to obtain a negative electrode plate. The negative electrode film layer has a single-side surface density of 0.02 $g/cm^2$ and a compacted density of 1.7 $g/cm^3$.

With a polyethylene (PE) porous polymer film as a separator, the positive electrode plate, the separator and the negative electrode plate are stacked in sequence, such that the separator is located between the positive electrode and the negative electrode to play a role of isolation, and then winding is performed to obtain a bare cell. The bare cell is placed in an outer package, and the same electrolyte as that for the preparation of the button battery is injected, followed by encapsulation, so as to obtain a full battery.

Example 2

Except that in "1) Preparation of positive electrode active material", the amount of high-purity $Li_2CO_3$ is changed into 0.4885 mol, $Mo(SO_4)_3$ is replaced by $MgSO_4$, the amount of $FeSO_4 \cdot H_2O$ is changed into 0.68 mol, 0.02 mol of $Ti(SO_4)_2$ is also added in the preparation of doped manganese oxalate, and $H_4SiO_4$ is replaced by HNOs, the rest are the same as in example 1.

Fig. 9 shows XRD patterns of undoped $LiMnPO_4$ and a positive electrode active material prepared in example 2. It can be seen from the figure that, the position of main characteristic peaks in the XRD pattern of the positive electrode active material of Example 2 is consistent with that of the undoped $LiMnPO_4$, indicating that no impurity phase is introduced in the doping process, and an improvement in performance is mainly attributed to the doping with elements, rather than an impurity phase.

Fig. 10 shows an EDS diagram of a positive electrode active material prepared in example 2. Those in spotted distribution in the figure are the doping elements. It can be seen from the figure that in the positive electrode active material of Example 2, the doping with elements is uniform.

Example 3

Except that in "1) Preparation of positive electrode active material", the amount of high-purity $Li_2CO_3$ is changed into 0.496 mol, $Mo(SO_4)_3$ is replaced by $W(SO_4)_3$, and $H_4SiO_4$ is replaced by $H_2SO_4$, the rest are the same as in example 1.

Example 4

Except that in "1) Preparation of positive electrode active material", the amount of high-purity $Li_2CO_3$ is changed into 0.4985 mol, 0.001 mol of $Mo(SO_4)_3$ is replaced by 0.0005 mol of $Al_2(SO_4)_3$, and $NH_4HF_2$ is replaced by $NH_4HCl_2$, the rest are the same as in example 1.

Example 5

Except that in "1) Preparation of positive electrode active material", 0.7 mol of $FeSO_4 \cdot H_2O$ is changed into 0.69 mol, 0.01 mol of $VCl_2$ is also added in the preparation of doped manganese oxalate, the amount of $Li_2CO_3$ is changed into 0.4965 mol, 0.001 mol of $Mo(SO_4)_3$ is replaced by 0.0005 mol of $Nb_2(SO_4)_5$, and $H_4SiO_4$ is replaced by $H_2SO_4$, the rest are the same as in example 1.

Example 6

Except that in "1) Preparation of positive electrode active material", the amount of $FeSO_4 \cdot H_2O$ is changed into 0.68 mol, 0.01 mol of $VCl_2$ and 0.01 mol of $MgSO_4$ are also added in the preparation of doped manganese oxalate, the amount of $Li_2CO_3$ is changed into 0.4965 mol, 0.001 mol of $Mo(SO_4)_3$ is replaced by 0.0005 mol of $Nb_2(SO_4)_5$, and $H_4SiO_4$ is replaced by $H_2SO_4$, the rest are the same as in example 1.

Example 7

Except that in "1) Preparation of positive electrode active material", $MgSO_4$ is replaced by $CoSO_4$, the rest are the same as in example 6.

Example 8

Except that in "1) Preparation of positive electrode active material", $MgSO_4$ is replaced by $NiSO_4$, the rest are the same as in example 6.

Example 9

Except that in "1) Preparation of positive electrode active material", the amount of $FeSO_4 \cdot H_2O$ is changed into 0.698 mol, 0.002 mol of $Ti(SO_4)_2$ is also added in the preparation of doped manganese oxalate, the amount of $Li_2CO_3$ is changed into 0.4955 mol, 0.001 mol of $Mo(SO_4)_3$ is replaced by 0.0005 mol of $Nb_2(SO_4)_5$, $H_4SiO_4$ is replaced by $H_2SO_4$, and $NH_4HF_2$ is made into $NH_4HCl_2$, the rest are the same as in example 1.

Example 10

Except that in "1) Preparation of positive electrode active material", the amount of $FeSO_4 \cdot H_2O$ is changed into 0.68 mol, 0.01 mol of $VCl_2$ and 0.01 mol of $MgSO_4$ are also added in the preparation of doped manganese oxalate, the amount of $Li_2CO_3$ is changed into 0.4975 mol, 0.001 mol of Mo(SOa)s is replaced by 0.0005 mol of $Nb_2(SO_4)_5$, and $NH_4HF_2$ is replaced by $NH_4HBr_2$, the rest are the same as in example 1.

Example 11

Except that in "1) Preparation of positive electrode active material", the amount of $FeSO_4 \cdot H_2O$ is changed into 0.69 mol, 0.01 mol of $VCl_2$ is also added in the preparation of doped manganese oxalate, the amount of $Li_2CO_3$ is changed into 0.499 mol, $Mo(SO_4)_3$ is replaced by $MgSO_4$, and $NH_4HF_2$ is replaced by $NH_4HBr_2$, the rest are the same as in example 1.

Example 12

Except that in "1) Preparation of positive electrode active material", the amount of $MnSO_4 \cdot H_2O$ is changed into 1.36 mol, the amount of $FeSO_4 \cdot H_2O$ is changed into 0.6 mol, 0.04 mol of $VCl_2$ is also added in the preparation of doped manganese oxalate, the amount of $Li_2CO_3$ is changed into 0.4985 mol, $Mo(SO_4)_3$ is replaced by $MgSO_4$, and $H_4SiO_4$ is replaced by HNOs, the rest are the same as in example 1.

Example 13

Except that in "1) Preparation of positive electrode active material", the amount of $MnSO_4 \cdot H_2O$ is changed into 1.16 mol, and the amount of $FeSO_4 \cdot H_2O$ is changed into 0.8 mol, the rest are the same as in example 12.

Example 14

Except that in "1) Preparation of positive electrode active material", the amount of $MnSO_4 \cdot H_2O$ is changed into 1.3 mol, and the amount of $VCl_2$ is changed into 0.1 mol, the rest are the same as in example 12.

Example 15

Except that in "1) Preparation of positive electrode active material", the amount of $MnSO_4 \cdot H_2O$ is changed into 1.2 mol, 0.1 mol of $VCl_2$ is also added in the preparation of doped manganese oxalate, the amount of $Li_2CO_3$ is changed into 0.494 mol, 0.001 mol of $Mo(SO_4)_3$ is replaced by 0.005 mol of $MgSO_4$, and $H_4SiO_4$ is replaced by $H_2SO_4$, the rest are the same as in example 1.

Example 16

Except that in "1) Preparation of positive electrode active material", the amount of $MnSO_4 \cdot H_2O$ is changed into

1.2 mol, 0.1 mol of $VCl_2$ is also added in the preparation of doped manganese oxalate, the amount of $Li_2CO_3$ is changed into 0.467 mol, 0.001 mol of $Mo(SO_4)_3$ is replaced by 0.005 mol of $MgSO_4$, 0.001 mol of $H_4SiO_4$ is replaced by 0.005 mol of $H_2SO_4$, and 1.175 mol of 85% phosphoric acid is replaced by 1.171 mol of 85% phosphoric acid, the rest are the same as in example 1.

Example 17

Except that in "1) Preparation of positive electrode active material", the amount of $MnSO_4 \cdot H_2O$ is changed into 1.2 mol, 0.1 mol of $VCl_2$ is also added in the preparation of doped manganese oxalate, the amount of $Li_2CO_3$ is changed into 0.492 mol, 0.001 mol of $Mo(SO_4)_3$ is replaced by 0.005 mol of $MgSO_4$, $H_4SiO_4$ is replaced by $H_2SO_4$, and 0.0005 mol of $NH_4HF_2$ is changed into 0.0025 mol, the rest are the same as in example 1.

Example 18

Except that in "1) Preparation of positive electrode active material", the amount of $FeSO_4 \cdot H_2O$ is changed into 0.5 mol, 0.1 mol of $VCl_2$ and 0.1 mol of $CoSO_4$ are also added in the preparation of doped manganese oxalate, the amount of $Li_2CO_3$ is changed into 0.492 mol, 0.001 mol of $Mo(SO_4)_3$ is replaced by 0.005 mol of $MgSO_4$, $H_4SiO_4$ is replaced by $H_2SO_4$, and 0.0005 mol of $NH_4HF_2$ is changed into 0.0025 mol, the rest are the same as in example 1.

Example 19

Except that in "1) Preparation of positive electrode active material", the amount of $FeSO_4 \cdot H_2O$ is changed into 0.4 mol, and 0.1 mol of $CoSO_4$ is changed into 0.2 mol, the rest are the same as in example 18.

Example 20

Except that in "1) Preparation of positive electrode active material", the amount of $MnSO_4 \cdot H_2O$ is changed into 1.5 mol, and the amount of $FeSO_4 \cdot H_2O$ is changed into 0.1 mol, and the amount of $CoSO_4$ is changed into 0.3 mol, the rest are the same as in example 18.

Example 21

Except that in "1) Preparation of positive electrode active material", 0.1 mol of $CoSO_4$ is replaced by 0.1 mol of $NiSO_4$, the rest are the same as in example 18.

Example 22

Except that in "1) Preparation of positive electrode active material", the amount of $MnSO_4 \cdot H_2O$ is changed into 1.5 mol, and the amount of $FeSO_4 \cdot H_2O$ is changed into 0.2 mol, and 0.1 mol of $CoSO_4$ is replaced by 0.2 mol of $NiSO_4$, the rest are the same as in example 18.

Example 23

Except that in "1) Preparation of positive electrode active material", the amount of $MnSO_4 \cdot H_2O$ is changed into 1.4 mol, and the amount of $FeSO_4 \cdot H_2O$ is changed into 0.3 mol, and the amount of $CoSO_4$ is changed into 0.2 mol, the rest are the same as in example 18.

Example 24

Except that in "1) Preparation of positive electrode active material", 1.3 mol of $MnSO_4 \cdot H_2O$ is changed into 1.2 mol, 0.7 mol of $FeSO_4 \cdot H_2O$ is changed into 0.5 mol, 0.1 mol of $VCl_2$ and 0.2 mol of $CoSO_4$ are also added in the preparation of doped manganese oxalate, the amount of $Li_2CO_3$ is changed into 0.497 mol, 0.001 mol of $Mo(SO_4)_3$ is replaced by 0.005 mol of $MgSO_4$, $H_4SiO_4$ is replaced by $H_2SO_4$, and 0.0005 mol of $NH_4HF_2$ is changed into 0.0025 mol, the rest are the same as in example 1.

Example 25

Except that in "1) Preparation of positive electrode active material", the amount of $MnSO_4 \cdot H_2O$ is changed into

1.0 mol, and the amount of $FeSO_4 \cdot H_2O$ is changed into 0.7 mol, and the amount of $CoSO_4$ is changed into 0.2 mol, the rest are the same as in example 18.

Example 26

Except that in "1) Preparation of positive electrode active material", the amount of $MnSO_4 \cdot H_2O$ is changed into 1.4 mol, the amount of $FeSC_4 \cdot H_2O$ is changed into 0.3 mol, 0.1 mol of $VCl_2$ and 0.2 mol of $CoSO_4$ are also added in the preparation of doped manganese oxalate, the amount of $Li_2CO_3$ is changed into 0.4825 mol, 0.001 mol of $Mo(SO_4)_3$ is replaced by 0.005 mol of $MgSO_4$, the amount of $H_4SiO_4$ is changed into 0.1 mol, the amount of phosphoric acid is changed into 0.9 mol, and the amount of $NH_4HF_2$ is changed into 0.04 mol, the rest are the same as in example 1.

Example 27

Except that in "1) Preparation of positive electrode active material", the amount of $MnSO_4 \cdot H_2O$ is changed into 1.4 mol, the amount of $FeSO_4 \cdot H_2O$ is changed into 0.3 mol, 0.1 mol of $VCl_2$ and 0.2 mol of $CoSO_4$ are also added in the preparation of doped manganese oxalate, the amount of $Li_2CO_3$ is changed into 0.485 mol, 0.001 mol of $Mo(SO_4)_3$ is replaced by 0.005 mol of $MgSO_4$, the amount of $H_4SiO_4$ is changed into 0.08 mol, the amount of phosphoric acid is changed into 0.92 mol, and the amount of $NH_4HF_2$ is changed into 0.05 mol, the rest are the same as in example 1.

Comparative example 1

Preparation of manganese oxalate: 1 mol of $MnSO_4 \cdot H_2O$ is added into a reaction kettle, and 10 L of deionized water and 1 mol of oxalic acid dihydrate (in oxalic acid) are added. The reaction kettle is heated to 80°C, stirring is performed for 6 hours at a rotation speed of 600 rpm, and the reaction is completed (no bubbles are generated), so as to obtain a manganese oxalate suspension. Then, the suspension is filtered, and the resultant filter cake is dried at 120°C and then ground, to obtain manganese oxalate particles with a median particle size $Dv_{50}$ of about 50 to 200 nm.

Preparation of lithium manganese phosphate: 1 mol of the above manganese oxalate particles, 0.5 mol of lithium carbonate, an 85% aqueous phosphoric acid solution containing 1 mol of phosphoric acid and 0.005 mol of sucrose are added into 20 L of deionized water. The mixture is transferred into a sander and thoroughly ground and stirred for 10 hours to obtain a slurry. The slurry is transferred into a spray drying apparatus for spray-drying granulation, where the drying temperature is set at 250°C and the drying time is 4 h, so as to obtain particles. The above powder is sintered at 700°C for 10 hours in a protective atmosphere of nitrogen (90% by volume) + hydrogen (10% by volume), so as to obtain carbon-coated $LiMnPO_4$.

Comparative example 2

Except that in comparative example 1, 1 mol of $MnSO_4 \cdot H_2O$ is replaced by 0.85 mol of $MnSO_4 \cdot H_2O$ and 0.15 mol of $FeSO_4 \cdot H_2O$, which are added into a mixer and thoroughly mixed for 6 h before adding into a reaction kettle, the rest are the same as in comparative example 1.

Comparative example 3

Except that in "1) Preparation of positive electrode active material", the amount of $MnSO_4 \cdot H_2O$ is changed into 1.9 mol, 0.7 mol of $FeSO_4 \cdot H_2O$ is replaced by 0.1 mol of $ZnSO_4$, the amount of $Li_2CO_3$ is changed into 0.495 mol, 0.001 mol of $Mo(SO_4)_3$ is replaced by 0.005 mol of $MgSO_4$, the amount of phosphoric acid is changed into 1 mol, and no $H_4SiO_4$ and $NH_4HF_2$ is added, the rest are the same as in example 1.

Comparative example 4

Except that in "1) Preparation of positive electrode active material", the amount of $MnSO_4 \cdot H_2O$ is changed into 1.2 mol, the amount of $FeSO_4 \cdot H_2O$ is changed into 0.8 mol, the amount of $Li_2CO_3$ is changed into 0.45 mol, 0.001 mol of $Mo(SO_4)_3$ is replaced by 0.005 mol of $Nb_2(SO_4)_5$, 0.999 mol of phosphoric acid is changed into 1 mol, 0.0005 mol of $NH_4HF_2$ is changed into 0.025 mol, and no $H_4SiO_4$ is added, the rest are the same as in example 1.

Comparative example 5

Except that in "1) Preparation of positive electrode active material", the amount of $MnSO_4 \cdot H_2O$ is changed into 1.4 mol, the amount of $FeSO_4 \cdot H_2O$ is changed into 0.6 mol, the amount of $Li_2CO_3$ is changed into 0.38 mol, and 0.001

mol of $Mo(SO_4)_3$ is replaced by 0.12 mol of $MgSO_4$, the rest are the same as in example 1.

Comparative example 6

Except that in "1) Preparation of positive electrode active material", the amount of $MnSO_4{\cdot}H_2O$ is changed into 0.8 mol, 0.7 mol of $FeSO_4{\cdot}H_2O$ is replaced by 1.2 mol of $ZnSO_4$, the amount of $Li_2CO_3$ is changed into 0.499 mol, and 0.001 mol of $Mo(SO_4)_3$ is replaced by 0.001 mol of $MgSO_4$, the rest are the same as in example 1.

Comparative example 7

Except that in "1) Preparation of positive electrode active material", the amount of $MnSO_4{\cdot}H_2O$ is changed into 1.4 mol, the amount of $FeSO_4{\cdot}H_2O$ is changed into 0.6 mol, the amount of $Li_2CO_3$ is changed into 0.534 mol, 0.001 mol of $Mo(SO_4)_3$ is replaced by 0.001 mol of $MgSO_4$, the amount of phosphoric acid is changed into 0.88 mol, the amount of $H_4SiO_4$ is changed into 0.12 mol, and the amount of $NH_4HF_2$ is changed into 0.025 mol, the rest are the same as in example 1.

Comparative example 8

Except that in "1) Preparation of positive electrode active material", the amount of $MnSO_4{\cdot}H_2O$ is changed into 1.2 mol, the amount of $FeSO_4{\cdot}H_2O$ is changed into 0.8 mol, the amount of $Li_2CO_3$ is changed into 0.474 mol, 0.001 mol of Mo(SOa)s is replaced by 0.001 mol of $MgSO_4$, the amount of phosphoric acid is changed into 0.93 mol, the amount of $H_4SiO_4$ is changed into 0.07 mol, and the amount of $NH_4HF_2$ is changed into 0.06 mol, the rest are the same as in example 1.

II. Method for testing properties of positive electrode active material and battery performance

1. Method for measuring lattice change rate

In a constant-temperature environment at 25°C, a positive electrode active material sample is placed in XRD (model: Bruker D8 Discover) and tested at 1°/min, and the test data are sorted and analyzed; and with reference to the standard PDF card, the lattice constants a0, b0, c0, and v0 at this time are calculated (a0, b0, and c0 represent the lengths of a unit cell on all sides, and v0 represents the volume of the unit cell, which could be obtained directly from XRD refinement results).

By using the method for preparing a button battery in the above-mentioned examples, the positive electrode active material sample is made into a button battery, and the button battery is charged at a small rate of 0.05C until the current is reduced to 0.01C. Then a positive electrode plate in the button battery is taken out and soaked in DMC for 8 h. Then the positive electrode plate is dried, powder is scraped off, and particles with a particle size of less than 500 nm are screened out. Sampling is performed, and a lattice constant v1 is calculated in the same way as that for testing the fresh sample as described above. (v0 - v1)/v0 x 100% is shown in a table as a lattice change rate of the sample before and after complete lithium intercalation and de-intercalation.

2. Method for measuring Li/Mn antisite defect concentration

The XRD results determined in the "Method for measuring lattice change rate" are compared with the PDF (Powder Diffraction File) card of a standard crystal, so as to obtain a Li/Mn antisite defect concentration. Specifically, the XRD results determined in the "Method for measuring lattice change rate" are imported into a general structure analysis system (GSAS) software, and refinement results are obtained automatically, including the occupancies of different atoms; and a Li/Mn antisite defect concentration is obtained by reading the refinement results.

3. Method for measuring surface oxygen valence state

5 g of a positive electrode active material is made into a button battery according to the method for preparing a button battery in the above-mentioned examples. The button battery is charged at a small rate of 0.05C until the current is reduced to 0.01C. Then a positive electrode plate in the button battery is taken out and soaked in DMC for 8 h. Then the positive electrode plate is dried, powder is scraped off, and particles with a particle size of less than 500 nm are screened out. The obtained particles are measured with electron energy loss spectroscopy (EELS, instrument model used: Talos F200S), so as to obtain an energy loss near-edge structure (ELNES) which reflects the density of states and energy level distribution of an element. According to the density of states and energy level distribution, the number

of occupied electrons is calculated by integrating the data of valence-band density of states, and then a valence state of surface oxygen after the charging is extrapolated.

4. Method for measuring compacted density

5 g of powder is put into a compaction dedicated mold (U.S. CARVER mold, model: 13 mm), and then the mold is placed on a compacted density instrument. A pressure of 3T is exerted, the thickness (after pressure relief) of the powder under pressure is read from the instrument, and a compacted density is calculated through $\rho$ = m/v.

5. Method for measuring dissolution of Mn (and Fe doping Mn-site) after cycling

A full battery after cycling to 80% attenuated capacity at 45°C is discharged to a cutoff voltage of 2.0 V at a rate of 0.1C. The battery is then disassembled, a negative electrode plate is taken out, a round piece of 30 unit areas (1540.25 $mm^2$) is randomly taken from the negative electrode plate, and inductively coupled plasma (ICP) emission spectroscopy is performed using Agilent ICP-OES730. The amounts of Fe (if the Mn-site of the positive electrode active material is doped with Fe) and Mn therein are calculated according to the ICP results, and then the dissolution of Mn (and Fe doping the Mn-site) after cycling is calculated. The testing standard is in accordance with EPA-6010D-2014.

6. Method for measuring initial gram capacity of button-type battery

At 2.5 to 4.3 V, a button battery is charged at 0.1C to 4.3 V, then charged at a constant voltage of 4.3 V until the current is less than or equal to 0.05 mA, allowed to stand for 5 min, and then discharged at 0.1C to 2.0 V; and the discharge capacity at this moment is the initial gram capacity, marked as D0.

7. Method for measuring 3C charge constant current rate

In a constant-temperature environment at 25°C, a fresh full battery is allowed to stand for 5 min, and discharged at 1/3C to 2.5 V. The full battery is allowed to stand for 5 min, charged at 1/3C to 4.3 V, and then charged at a constant voltage of 4.3 V until the current is less than or equal to 0.05 mA. The full battery is left to stand for 5 min, and the charge capacity at this time is recorded as C0. The full battery is discharged at 1/3C to 2.5 V, allowed to stand for 5 min, then charged at 3C to 4.3 V, and allowed to stand for 5 min, and the charge capacity at this moment is recorded as C1. The charge constant current rate at 3C is C1/CO $\times$ 100%.

A higher 3C charge constant current rate indicates a better rate performance of the battery.

8. Test of cycle performance of full battery at 45°C

In a constant-temperature environment at 45°C, at 2.5 to 4.3 V, a full battery is charged at 1C to 4.3 V, and then charged at a constant voltage of 4.3 V until the current is less than or equal to 0.05 mA. The full battery is allowed to stand for 5 min, and then discharged at 1C to 2.5 V, and the discharge capacity at this moment is recorded as D0. The above-mentioned charge/discharge cycle is repeated until the discharge capacity is reduced to 80% of D0. The number of cycles experienced by the battery at this time is recorded.

9. Test of expansion of full battery at 60°C

At 60°C, a full battery with 100% SOC (State of Charge) is stored. Before and after and during the storage, the open-circuit voltage (OCV) and AC internal impedance (IMP) of a cell are measured for monitoring the SOC, and the volume of the cell is measured. Herein, the full battery is taken out after every 48 h of storage, and allowed to stand for 1 h, then the OCV and internal IMP are measured, and the cell volume is measured with the displacement method after the full battery is cooled to room temperature. The water displacement method means that the gravity $F_1$ of the battery cell is measured separately using a balance with automatic unit conversion of on-board data, the battery cell is then completely placed in deionized water (with a density known to be 1 g/$cm^3$), the gravity $F_2$ of the battery cell at this time is measured, the buoyancy $F_{buoyancy}$ on the battery cell is $F_1$ - $F_2$, and the battery cell volume is calculated as V = ($F_1$ - $F_2$)/($\rho \times$ g) according to the Archimedes' principle $F_{buoyancy} = \rho \times g \times V_{displacement}$.

From the test results of OCV and IMP, the battery of the example always maintains a SOC of no less than 99% in the experimental process till the end of the storage.

After 30 days of storage, the cell volume is measured, and a percentage increase in cell volume after the storage relative to the cell volume before the storage is calculated.

In addition, residual capacity of the cell is measured. At 2.5 to 4.3 V, the full battery is charged at 1C to 4.3 V,

and then charged at a constant voltage of 4.3 V until the current is less than or equal to 0.05 mA. The full battery is allowed to stand for 5 min, and the charge capacity at this moment is recorded as the residual capacity of the cell.

Table 1 shows the compositions of the positive electrode active materials of Examples 1 to 11 and Comparative examples 1 to 8. Table 2 shows the performance data of the positive electrode active materials or button batteries or full batteries of Examples 1 to 11 and Comparative examples 1 to 8 obtained according to the above-mentioned performance testing methods. Table 3 shows the compositions of the positive electrode active materials of Examples 12 to 27. Table 4 shows the performance data of the positive electrode active materials or button batteries or full batteries of Examples 12 to 27 obtained according to the above-mentioned performance testing methods.

Table 1 Compositions of positive electrode active materials of Examples 1 to 11 and Comparative examples 1 to 8

| | Positive electrode active material |
|---|---|
| Comparative example 1 | $LiMnPO_4$ |
| Comparative example 2 | $LiMn_{0.85}Fe_{0.15}PO_4$ |
| Comparative example 3 | $Li_{0.990}Mg_{0.005}Mn_{0.95}Zn_{0.05}PO_4$ |
| Comparative example 4 | $Li_{0.90}Nb_{0.01}Mn_{0.6}Fe_{0.4}PO_{3.95}F_{0.05}$ |
| Comparative example 5 | $Li_{0.76}Mg_{0.12}Mn_{0.7}Fe_{0.3}P_{0.999}Si_{0.001}O_{3.999}F_{0.001}$ |
| Comparative example 6 | $Li_{0.998}Mg_{0.001}Mn_{0.4}Zn_{0.6}P_{0.999}Si_{0.001}O_{3.999}F_{0.001}$ |
| Comparative example 7 | $Li_{1.068}Mg_{0.001}Mn_{0.7}Fe_{0.3}P_{0.88}Si_{0.12}O_{3.95}F_{0.05}$ |
| Comparative example 8 | $Li_{0.948}Mg_{0.001}Mn_{0.6}Fe_{0.4}P_{0.93}Si_{0.07}O_{3.88}F_{0.12}$ |
| Example 1 | $Li_{0.994}Mo_{0.001}Mn_{0.65}Fe_{0.35}P_{0.999}Si_{0.001}O_{3.999}F_{0.001}$ |
| Example 2 | $Li_{0.977}Mg_{0.001}Mn_{0.65}Fe_{0.34}Ti_{0.01}P_{0.999}N_{0.001}O_{3.999}F_{0.001}$ |
| Example 3 | $Li_{0.992}W_{0.001}Mn_{0.65}Fe_{0.35}P_{0.999}S_{0.001}O_{3.999}F_{0.001}$ |
| Example 4 | $Li_{0.997}Al_{0.001}Mn_{0.65}Fe_{0.35}P_{0.999}Si_{0.001}O_{3.999}Cl_{0.001}$ |
| Example 5 | $Li_{0.993}Nb_{0.001}Mn_{0.65}Fe_{0.345}V_{0.005}P_{0.999}S_{0.001}O_{3.999}F_{0.001}$ |
| Example 6 | $Li_{0.993}Nb_{0.001}Mn_{0.65}Fe_{0.34}V_{0.005}Mg_{0.005}P_{0.999}S_{0.001}O_{3.999}F_{0.001}$ |
| Example 7 | $Li_{0.993}Nb_{0.001}Mn_{0.65}Fe_{0.34}V_{0.005}Co_{0.005}P_{0.999}S_{0.001}O_{3.999}F_{0.001}$ |
| Example 8 | $Li_{0.993}Nb_{0.001}Mn_{0.65}Fe_{0.34}V_{0.005}Ni_{0.005}P_{0.999}S_{0.001}O_{3.999}F_{0.001}$ |
| Example 9 | $Li_{0.991}Nb_{0.001}Mn_{0.65}Fe_{0.349}Ti_{0.001}P_{0.999}S_{0.001}O_{3.999}Cl_{0.001}$ |
| Example 10 | $Li_{0.995}Nb_{0.001}Mn_{0.65}Fe_{0.34}V_{0.005}Mg_{0.005}P_{0.999}Si_{0.001}O_{3.999}Br_{0.001}$ |
| Example 11 | $Li_{0.998}Mg_{0.001}Mn_{0.65}Fe_{0.345}V_{0.005}P_{0.999}Si_{0.001}O_{3.999}Br_{0.001}$ |

Table 2 Performance data of positive electrode active materials or button batteries or full batteries of Examples 1 to 11 and Comparative examples 1 to 8 obtained according to the above-mentioned performance testing methods

| | Lattice change rate (%) | Li/Mn antisite defect concentration (%) | Surface oxygen valence state | Compacted density ($g/cm^3$) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Comparative example 1 | 11.4 | 5.2 | -1.55 | 1.7 | 2060 | 125.6 | 50.1 | 121 | 48.6 |
| Comparative example 2 | 10.6 | 4.3 | -1.51 | 1.87 | 1510 | 126.4 | 50.4 | 129 | 37.3 |
| Comparative example 3 | 10.8 | 3.6 | -1.64 | 1.88 | 1028 | 134.7 | 51.7 | 134 | 31.9 |
| Comparative example 4 | 9.7 | 2.4 | -1.71 | 1.93 | 980 | 141.3 | 62.3 | 148 | 30.8 |
| Comparative example 5 | 5.6 | 1.8 | -1.81 | 1.98 | 873 | 110.8 | 50.2 | 387 | 21.4 |
| Comparative example 6 | 3.7 | 1.5 | -1.80 | 2.01 | 574 | 74.3 | 65.8 | 469 | 15.8 |
| Comparative example 7 | 7.8 | 1.5 | -1.75 | 2.05 | 447 | 139.4 | 64.3 | 396 | 18.3 |
| Comparative example 8 | 8.4 | 1.4 | -1.79 | 2.16 | 263 | 141.7 | 63.9 | 407 | 22.7 |
| Example 1 | 6.3 | 1.2 | -1.82 | 2.21 | 192 | 156.2 | 68.1 | 552 | 8.4 |
| Example 2 | 6.8 | 1.1 | -1.85 | 2.25 | 161 | 153.4 | 75.1 | 583 | 7.5 |
| Example 3 | 6.4 | 0.9 | -1.86 | 2.31 | 144 | 154.6 | 76.7 | 646 | 8.6 |
| Example 4 | 5.5 | 0.9 | -1.89 | 2.38 | 125 | 153.6 | 78.4 | 638 | 8.3 |
| Example 5 | 5.3 | 0.7 | -1.98 | 2.45 | 102 | 153.8 | 84.5 | 769 | 7.8 |
| Example 6 | 2.4 | 0.7 | -1.95 | 2.47 | 88 | 157.5 | 92.5 | 747 | 6.4 |
| Example 7 | 2.2 | 0.6 | -1.96 | 2.49 | 85 | 158.5 | 94.8 | 858 | 6.3 |
| Example 8 | 3.4 | 0.5 | -1.98 | 2.51 | 79 | 157.6 | 93.8 | 726 | 6.2 |

(continued)

| | Lattice change rate (%) | Li/Mn antisite defect concentration (%) | Surface oxygen valence state | Compacted density ($g/cm^3$) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Example 9 | 3.8 | 0.5 | -1.96 | 2.45 | 86 | 146.8 | 90.3 | 686 | 6.8 |
| Example 10 | 4.0 | 0.6 | -1.97 | 2.46 | 103 | 155.7 | 91.2 | 638 | 6.5 |
| Example 11 | 3.6 | 0.7 | -1.95 | 2.46 | 112 | 155.8 | 92.6 | 587 | 6.4 |

Table 3 Compositions of positive electrode active materials of Examples 12 to 27

| | Positive electrode active material | (1-y) : y | a : x |
|---|---|---|---|
| Example 12 | $Li_{0.997}Mg_{0.001}Mn_{0.68}Fe_{0.3}V_{0.02}P_{0.999}N_{0.001}O_{3.999}F_{0.001}$ | 2.13 | 997 |
| Example 13 | $Li_{0.997}Mg_{0.001}Mn_{0.58}Fe_{0.4}V_{0.02}P_{0.999}N_{0.001}O_{3.999}F_{0.001}$ | 1.38 | 997 |
| Example 14 | $Li_{0.997}Mg_{0.001}Mn_{0.65}Fe_{0.3}V_{0.05}P_{0.999}N_{0.001}O_{3.999}F_{0.001}$ | 1.86 | 997 |
| Example 15 | $Li_{0.988}Mg_{0.005}Mn_{0.6}Fe_{0.35}V_{0.05}P_{0.999}S_{0.001}O_{3.999}F_{0.001}$ | 1.50 | 197.6 |
| Example 16 | $Li_{0.984}Mg_{0.005}Mn_{0.6}Fe_{0.35}V_{0.05}P_{0.995}S_{0.005}O_{3.999}F_{0.001}$ | 1.50 | 196.8 |
| Example 17 | $Li_{0.984}Mg_{0.005}Mn_{0.6}Fe_{0.35}V_{0.05}P_{0.999}S_{0.001}O_{3.995}F_{0.005}$ | 1.50 | 196.8 |
| Example 18 | $Li_{0.984}Mg_{0.005}Mn_{0.65}Fe_{0.25}V_{0.05}Co_{0.05}P_{0.999}S_{0.001}O_{3.995}F_{0.005}$ | 1.86 | 196.8 |
| Example 19 | $Li_{0.984}Mg_{0.005}Mn_{0.65}Fe_{0.20}V_{0.05}Co_{0.10}P_{0.999}S_{0.001}O_{3.995}F_{0.005}$ | 1.86 | 196.8 |
| Example 20 | $Li_{0.984}Mg_{0.005}Mn_{0.75}Fe_{0.05}V_{0.05}Co_{0.15}P_{0.999}S_{0.001}O_{3.995}F_{0.005}$ | 3.00 | 196.8 |
| Example 21 | $Li_{0.984}Mg_{0.005}Mn_{0.65}Fe_{0.25}V_{0.05}Ni_{0.05}P_{0.999}S_{0.001}O_{3.995}F_{0.005}$ | 1.86 | 196.8 |
| Example 22 | $Li_{0.984}Mg_{0.005}Mn_{0.75}Fe_{0.10}V_{0.05}Ni_{0.10}P_{0.999}S_{0.001}O_{3.995}F_{0.005}$ | 3.00 | 196.8 |
| Example 23 | $Li_{0.984}Mg_{0.005}Mn_{0.7}Fe_{0.15}V_{0.05}Co_{0.10}P_{0.999}S_{0.001}O_{3.995}F_{0.005}$ | 2.33 | 196.8 |
| Example 24 | $Li_{0.984}Mg_{0.005}Mn_{0.6}Fe_{0.25}V_{0.05}Co_{0.10}P_{0.999}S_{0.001}O_{3.995}F_{0.005}$ | 1.50 | 196.8 |
| Example 25 | $Li_{0.984}Mg_{0.005}Mn_{0.5}Fe_{0.35}V_{0.05}Co_{0.10}P_{0.999}S_{0.001}O_{3.995}F_{0.005}$ | 1.00 | 196.8 |
| Example 26 | $Li_{1.01}Mg_{0.005}Mn_{0.7}Fe_{0.15}V_{0.05}Co_{0.10}P_{0.9}Si_{0.1}O_{3.92}F_{0.08}$ | 2.33 | 202 |
| Example 27 | $Li_{0.97}Mg_{0.005}Mn_{0.7}Fe_{0.15}V_{0.05}CO_{0.10}P_{0.92}Si_{0.08}O_{3.9}F_{0.1}$ | 2.33 | 194 |

Table 4 Performance data of positive electrode active materials or button batteries or full batteries of Examples 12 to 27 obtained according to the above-mentioned performance testing methods

| | Lattice change rate (%) | Li/Mn antisite defect concentration (%) | Surface oxygen valence state | Compacted density (g/cm$^3$) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Example 12 | 7.4 | 0.5 | -1.96 | 2.45 | 92 | 153.3 | 97.2 | 948 | 6.7 |
| Example 13 | 7.6 | 0.4 | -1.98 | 2.48 | 83 | 157.1 | 85.1 | 953 | 7.8 |
| Example 14 | 7.8 | 0.6 | -1.95 | 2.47 | 87 | 155.4 | 85.2 | 1067 | 6.9 |
| Example 15 | 6.4 | 0.5 | -1.97 | 2.49 | 86 | 156.4 | 82.1 | 938 | 7.5 |
| Example 16 | 5.4 | 0.7 | -1.94 | 2.44 | 86 | 156.1 | 87.3 | 927 | 8.4 |
| Example 17 | 4.2 | 0.6 | -1.98 | 2.42 | 88 | 156.5 | 92.1 | 919 | 7.5 |
| Example 18 | 2.5 | 0.4 | -1.96 | 2.46 | 84 | 157.4 | 94.0 | 1057 | 6.4 |
| Example 19 | 2.4 | 0.4 | -1.97 | 2.47 | 84 | 156.8 | 94.4 | 1064 | 6.7 |
| Example 20 | 2.6 | 0.4 | -1.95 | 2.45 | 86 | 154.8 | 93.7 | 975 | 7.3 |
| Example 21 | 3.3 | 0.5 | -1.93 | 2.46 | 82 | 155.7 | 91.5 | 989 | 6.3 |
| Example 22 | 3.1 | 0.5 | -1.95 | 2.46 | 75 | 157.3 | 91.6 | 964 | 6.3 |
| Example 23 | 2.8 | 0.6 | -1.96 | 2.44 | 67 | 151.8 | 84.4 | 864 | 5.9 |
| Example 24 | 2.5 | 0.5 | -1.97 | 2.45 | 65 | 152.3 | 90.2 | 976 | 5.6 |

(continued)

| | Lattice change rate (%) | Li/Mn antisite defect concentration (%) | Surface oxygen valence state | Compacted density (g/cm$^3$) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Example 25 | 2.2 | 0.4 | -1.98 | 2.46 | 58 | 153.3 | 92.2 | 986 | 5.2 |
| Example 26 | 3.4 | 0.6 | -1.95 | 2.25 | 45 | 147.3 | 92.5 | 978 | 9.3 |
| Example 27 | 2.7 | 0.5 | -1.98 | 2.28 | 42 | 145.8 | 91.8 | 937 | 10.5 |

Example 28-41

A positive electrode active material, a button battery and a full battery are prepared in the same way as in example 1, except that the stirring speed and temperature in the preparation of doped manganese oxalate, the time of grinding and stirring in a sander, and the sintering temperature and sintering time are changed, specifically as shown in Table 5 below.

Also, the performance data of the positive electrode active materials or button batteries or full batteries of Examples 28 to 41 obtained according to the above-mentioned performance testing methods are shown in Table 6.

Table 5 Stirring speed and temperature in the preparation of doped manganese oxalate, time of grinding and stirring in a sander, and sintering temperature and sintering time in Examples 28 to 41

| | Stirring rotation speed (rpm) | Stirring temperature (°C) | Grinding time (h) | Sintering temperature (°C) | Sintering time (h) |
|---|---|---|---|---|---|
| Example 28 | 200 | 50 | 12 | 700 | 10 |
| Example 29 | 300 | 50 | 12 | 700 | 10 |
| Example 30 | 400 | 50 | 12 | 700 | 10 |
| Example 31 | 500 | 50 | 12 | 700 | 10 |
| Example 32 | 600 | 50 | 10 | 700 | 10 |
| Example 33 | 700 | 50 | 11 | 700 | 10 |
| Example 34 | 800 | 50 | 12 | 700 | 10 |
| Example 35 | 600 | 60 | 12 | 700 | 10 |
| Example 36 | 600 | 70 | 12 | 700 | 10 |
| Example 37 | 600 | 80 | 12 | 700 | 10 |
| Example 38 | 600 | 90 | 12 | 600 | 10 |
| Example 39 | 600 | 100 | 12 | 800 | 10 |
| Example 40 | 600 | 110 | 12 | 700 | 8 |
| Example 41 | 600 | 120 | 12 | 700 | 12 |

Table 6 Performance data of positive electrode active materials or button batteries or full batteries of Examples 28 to 41 obtained according to the above-mentioned performance testing methods

| | Lattice change rate (%) | Li/Mn antisite defect concentration | Surface oxygen valence state | Compacted density ($g/cm^3$) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Example 28 | 7.8 | 5.6 | -1.59 | 1.89 | 341 | 138.1 | 53.1 | 594 | 24.1 |
| Example 29 | 7.4 | 4.8 | -1.62 | 1.94 | 279 | 140.3 | 55.6 | 628 | 22.4 |
| Example 30 | 7.2 | 4.5 | -1.66 | 1.98 | 248 | 141.5 | 56.8 | 689 | 21.6 |
| Example 31 | 7.1 | 4.1 | -1.68 | 2.01 | 216 | 142.3 | 57.5 | 721 | 18.7 |
| Example 32 | 6.8 | 3.8 | -1.71 | 2.04 | 184 | 143.8 | 59.3 | 749 | 15.6 |
| Example 33 | 6.7 | 3.4 | -1.75 | 2.06 | 176 | 144.2 | 61.4 | 756 | 11.3 |
| Example 34 | 6.6 | 3.1 | -1.76 | 2.08 | 139 | 148.2 | 62.6 | 787 | 10.8 |
| Example 35 | 6.4 | 2.7 | -1.76 | 2.13 | 126 | 149.8 | 63.8 | 816 | 9.6 |
| Example 36 | 6.4 | 1.9 | -1.77 | 2.15 | 103 | 152.3 | 65.4 | 937 | 8.9 |
| Example 37 | 6.4 | 1.4 | -1.84 | 2.27 | 89 | 157.2 | 69.1 | 982 | 8.2 |
| Example 38 | 6.5 | 1.8 | -1.78 | 2.16 | 113 | 153.9 | 66.3 | 921 | 9.1 |
| Example 39 | 6.8 | 2.7 | -1.76 | 2.12 | 134 | 152.1 | 64.5 | 998 | 9.8 |
| Example 40 | 7.1 | 3.4 | -1.74 | 2.08 | 161 | 150.2 | 63.4 | 926 | 10.5 |

(continued)

| | Lattice change rate (%) | Li/Mn antisite defect concentration | Surface oxygen valence state | Compacted density ($g/cm^3$) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Example 41 | 7.8 | 4.5 | -1.70 | 2.03 | 189 | 148.1 | 61.3 | 837 | 11.8 |

Examples 42-54

A positive electrode active material, a button battery and a full battery are prepared in the same way as in example 1, except that the lithium source, the manganese source, the phosphorus source and the sources of doping elements A, B, C and D are changed, specifically as shown in Table 7 below. The prepared positive electrode active materials all had the same composition as in Example 1, namely, $Li_{0.994}Mo_{0.001}Mn_{0.65}Fe_{0.35}P_{0.999}Si_{0.001}O_{3.999}F_{0.001}$.

Also, the performance data of the positive electrode active materials or button batteries or full batteries of examples 42 to 54 obtained according to the above-mentioned performance testing methods are shown in Table 8.

Table 7 Lithium source, manganese source, phosphorus source and sources of doping elements A, B, C and D in Examples 42 to 54

| | Lithium source | Manganese source | Phosphorus source | Source of A | Source of B | Source of C | Source of D |
|---|---|---|---|---|---|---|---|
| Example 42 | LiOH | $MnCO_3$ | $NH_4H_2PO_4$ | $Mo(NO_3)_6$ | FeO | $H_4SiO_4$ | $NH_4F$ |
| Example 43 | LiOH | MnO | $NH_4H_2PO_4$ | $Mo(NO_3)_6$ | FeO | $H_4SiO_4$ | $NH_4F$ |
| Example 44 | LiOH | $Mn_3O_4$ | $NH_4H_2PO_4$ | $Mo(NO_3)_6$ | FeO | $H_4SiO_4$ | $NH_4F$ |
| Example 45 | LiOH | $Mn(NO_3)_2$ | $NH_4H_2PO_4$ | $Mo(NO_3)_6$ | FeO | $H_4SiO_4$ | $NH_4F$ |
| Example 46 | LiOH | MnO | $NH_4H_2PO_4$ | $Mo(NO_3)_6$ | $FeCO_3$ | $H_4SiO_4$ | $NH_4F$ |
| Example 47 | LiOH | MnO | $NH_4H_2PO_4$ | $Mo(NO_3)_6$ | $Fe(NO_3)_2$ | $H_4SiO_4$ | $NH_4F$ |
| Example 48 | LiOH | MnO | $NH_4H_2PO_4$ | $Mo(NO_3)_6$ | $Fe_3O_4$ | $H_4SiO_4$ | $NH_4F$ |
| Example 49 | LiOH | MnO | $NH_4H_2PO_4$ | $Mo(NO_3)_6$ | $FeC_2O_4$ | $H_4SiO_4$ | $NH_4F$ |
| Example 50 | LiOH | MnO | $NH_4H_2PO_4$ | $Mo(NO_3)_6$ | Fe | $H_4SiO_4$ | $NH_4F$ |
| Example 51 | LiOH | MnO | $NH_4H_2PO_4$ | $Mo(PO_4)_2$ | FeO | $H_4SiO_4$ | $NH_4F$ |
| Example 52 | LiOH | MnO | $NH_4H_2PO_4$ | $Mo(C_2O_4)_3$ | FeO | $H_4SiO_4$ | $NH_4F$ |
| Example 53 | LiOH | MnO | $NH_4H_2PO_4$ | $MoO_3$ | FeO | $H_4SiO_4$ | $NH_4F$ |
| Example 54 | LiOH | MnO | $NH_4H_2PO_4$ | Mo | FeO | $H_4SiO_4$ | $NH_4F$ |

Table 8 Performance data of positive electrode active materials or button batteries or full batteries of examples 42 to 54 obtained according to the above-mentioned performance testing methods

| | Lattice change rate (%) | Li/Mn antisite defect concentration | Surface oxygen valence state | Compacted density (g/cm$^3$) | Dissolution of Mn and Fe after cycling (ppm) | Initial gram capacity of button battery (mAh/g) | 3C charge constant current rate (%) | Number of cycles for capacity retention rate of 80% at 45°C | Expansion rate of cell when stored at 60°C (%) |
|---|---|---|---|---|---|---|---|---|---|
| Example 42 | 6.5 | 2.8 | -1.80 | 2.19 | 95 | 155.7 | 67.3 | 519 | 10.3 |
| Example 43 | 6.7 | 2.6 | -1.81 | 2.18 | 88 | 156.1 | 67.6 | 525 | 9.8 |
| Example 44 | 6.8 | 2.7 | -1.83 | 2.20 | 91 | 155.5 | 67.5 | 522 | 10.1 |
| Example 45 | 6.7 | 2.6 | -1.82 | 2.17 | 85 | 155.9 | 67.4 | 517 | 9.5 |
| Example 46 | 6.4 | 2.5 | -1.83 | 2.18 | 134 | 150.9 | 61.4 | 501 | 11.6 |
| Example 47 | 6.1 | 2.1 | -1.81 | 2.21 | 114 | 152.8 | 63.7 | 518 | 10.8 |
| Example 48 | 6.6 | 1.8 | -1.79 | 2.23 | 105 | 154.3 | 65.4 | 538 | 9.2 |
| Example 49 | 6.4 | 1.4 | -1.85 | 2.22 | 95 | 156.6 | 68.4 | 572 | 8.7 |
| Example 50 | 7.5 | 3.4 | -1.75 | 2.08 | 115 | 149.5 | 58.3 | 426 | 9.6 |
| Example 51 | 6.5 | 1.5 | -1.83 | 2.21 | 95 | 155.8 | 67.5 | 531 | 8.8 |
| Example 52 | 6.8 | 1.7 | -1.81 | 2.23 | 101 | 154.6 | 66.9 | 518 | 7.4 |
| Example 53 | 6.6 | 1.6 | -1.82 | 2.24 | 118 | 155.3 | 67.2 | 508 | 7.9 |
| Example 54 | 8.7 | 2.4 | -1.79 | 2.17 | 129 | 152.3 | 65.4 | 483 | 11.2 |

It can be seen from Tables 2, 4, 6 and 8 above that, the positive electrode active materials of the examples of the present application all achieve a better effect than the comparative examples in one or even all terms of cycle performance, high-temperature stability, gram capacity and compacted density.

Through comparison between Examples 18 to 20 and 23 to 25, it can be seen that in the case of the same rest elements, when (1-y) : y is in a range of 1 to 4, the energy density and cycle performance of the secondary battery can be further improved.

Specific examples about the new conductive undercoat layer

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

For the distinguishment from the new positive electrode material in the above specific examples, the specific examples of the new conductive undercoat layer are marked with a suffix P after the number.

Example 1P (with a positive electrode active material of examples 1)

1. Provision of first polymer

In the following examples, the first polymer is a hydrogenated carboxylated nitrile rubber, which contains a first monomeric unit, a second monomeric unit, a third monomeric unit, and a fourth monomeric unit. The weight percentages of the first monomeric unit, the second monomeric unit, the third monomeric unit, and the fourth monomeric unit in the polymer and the weight-average molecular weight of the first polymer are as shown in Table 1P.

The first monomeric unit is a monomeric unit represented by formula 1;

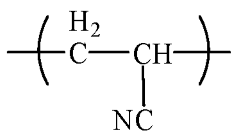

formula 1

the second monomeric unit is selected from at least one of a group consisting of a monomeric unit represented by formula 2 and a monomeric unit represented by formula 3

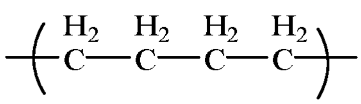

formula 2

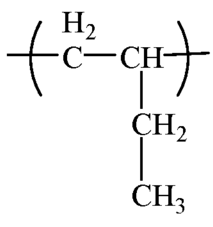

formula 3

the third monomeric unit is selected from at least one of a group consisting of a monomeric unit represented by formula 4 and a monomeric unit represented by formula 5

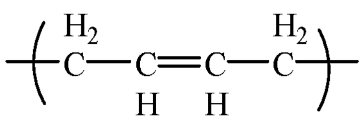

formula 4

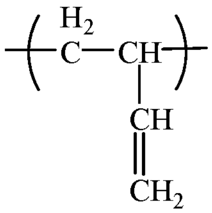

formula 5

the fourth monomeric unit is a monomeric unit represented by formula 6:

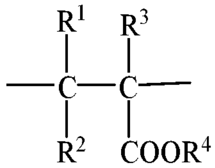

formula 6

In this example, $R^1$, $R^2$, and $R^3$ are all H, and $R^4$ is n-butyl.

Table 1P

| First monomeric unit weight percentage M1 | Second monomeric unit weight percentage M2 | Third monomeric unit weight percentage M3 | Fourth monomeric unit weight percentage M4 | Weight-average molecular weight /10,000 |
|---|---|---|---|---|
| 34% | 64% | 1% | 1% | 25 |

2. Preparation of aluminum foil with conductive undercoat layer

The first polymer, the first water-based binder (a polyacrylic acid-acrylate copolymer, a weight-average molecular weight of 340,000) and the first conductive agent (SP) are dissolved/dispersed at a weight ratio of 15 : 40 : 45 into deionized water and formulated as a conductive undercoat layer slurry.

The conductive undercoat layer slurry is applied to both sides of an aluminum foil, and after drying, a conductive undercoat layer with a thickness of 5 $\mu$m is formed on each side. An aluminum foil with a conductive undercoat layer is obtained.

3) Preparation of positive electrode plate

The positive electrode active material ($Li_{0.994}Mo_{0.001}Mn_{0.65}Fe_{0.35}P_{0.999}Si_{0.001}O_{3.999}F_{0.001}$) prepared in the above example 1, a conductive agent acetylene black and a binder polyvinylidene fluoride (PVDF) are mixed uniformly in an N-methylpyrrolidone solvent system at a weight ratio of 92 : 2.5 : 5.5, to obtain the positive electrode slurry, the positive electrode slurry is coated on both sides of the aluminum foil with a conductive undercoat layer, followed by drying and cold pressing, to form a positive electrode film layer, so as to obtain a positive electrode plate. The positive electrode film layer has a single-side surface density of 0.025 g/cm$^2$ and a compacted density of 2.4 g/cm$^3$.

4) Preparation of negative electrode plate

Negative electrode active materials artificial graphite and hard carbon, a conductive agent acetylene black, a binder styrene butadiene rubber (SBR) and a thickening agent sodium carboxymethylcellulose (CMC) are uniformly mixed in deionized water in a weight ratio of 90 : 5 : 2 : 2 : 1, and the mixture is applied to a copper foil, followed by drying and cold pressing, so as to form a negative electrode film layer, to obtain a negative electrode plate. The negative electrode film layer has a surface density of 0.013 g/cm$^2$ on one side and a compacted density of 1.7 g/cm$^3$.

5) Packaging of full battery

With a polyethylene (PE) porous polymer film as a separator, the positive electrode plate, the separator and the negative electrode plate are stacked in sequence, such that the separator is located between the positive electrode and the negative electrode to play a role of isolation, and then winding is performed to obtain a bare cell. The bare battery

cell is placed in an outer package, which is injected with the above electrolyte and packaged to obtain the full battery.

The weight of the positive electrode active substance in a single full battery is 565.66 g; and the weight of the negative electrode active substance is 309.38 g.

Examples 2P-27P (with positive electrode active materials of examples 2-27)

Examples 2P-27P are different from example 1 by step 3). Other step parameters are the same as those in example 1P.

The positive electrode active materials used in step 3) in examples 2P - 27P are the positive electrode active materials in the above examples 2 -27 respectively.

Comparative examples 1P-9P (without conductive undercoat layer)

Examples 1P-9P are different from example 1P by steps 2) and 3). Other step parameters are the same as those in example 1P.

In comparative examples 1P-9P, in steps 2) and 3), no aluminum foil with a conductive undercoat layer is prepared, and the positive electrode slurry is directly coated onto the aluminum foil, followed by drying, and cold pressing to form the positive electrode film layer, so as to obtain the positive electrode plate.

The positive electrode active materials used in step 3) of comparative examples 1P - 8P are the positive electrode active materials of the above comparative examples 1-8, respectively.

The positive electrode active material used in step 3) of comparative example 9P is the positive electrode active material of the above example 1.

Comparative example 10P (without first polymer)

Comparative example 10P is different from example 1P by step 2). Other step parameters are the same as those in example 1P.

In step 2) of comparative example 10P, the first water-based binder (a polyacrylic acid-acrylate copolymer) and the first conductive agent (SP), at a weight ratio of 40 : 45, are dissolved/dispersed in deionized water, and formulated as a conductive undercoat layer slurry. The conductive undercoat layer slurry is coated onto an aluminum foil, and dried to form a conductive undercoat layer with a thickness of 5 $\mu$m. An aluminum foil with a conductive undercoat layer is obtained.

Comparative example 11P (replacing the first polymer with polymer I)

Comparative example 11P is different from example 1P by step 2). Other step parameters are the same as those in example 1P.

In step 2) of comparative example 11P, the polymer I, the first water-based binder (a polyacrylic acid-acrylate copolymer) and the first conductive agent (SP), at a weight ratio of 15 : 40 : 45, are dissolved/dispersed in deionized water, and formulated as a conductive undercoat layer slurry. The conductive undercoat layer slurry is coated onto an aluminum foil, and dried to form a conductive undercoat layer with a thickness of 5 $\mu$m. An aluminum foil with a conductive undercoat layer is obtained.

The difference between the polymer I and the first polymer is that the compositions of the polymer are different, and the composition of the polymer I and the weight-average molecular weight of the polymer I are shown in Table 2P below.

Table 2P

| First monomeric unit weight percentage M1 | Second monomeric unit weight percentage M2 | Third monomeric unit weight percentage M3 | Fourth monomeric unit weight percentage M4 | Weight-average molecular weight /10,000 |
|---|---|---|---|---|
| 30% | 59% | 10% | 1% | 25 |

Comparative example 12P (replacing the first water-based binder with I binder)

Comparative example 12P is different from example 1P by step 2). Other step parameters are the same as those in example 1P.

In step 2) of comparative example 12P, the first polymer, the I binder (polyacrylic acid, a weight-average molecular weight of 350,000) and the first conductive agent (SP), at a weight ratio of 15 : 40 : 45, are dissolved/dispersed in deionized water, and formulated as a conductive undercoat layer slurry. The conductive undercoat layer slurry is applied to an aluminum foil, and after drying, a conductive undercoat layer with a thickness of 5 μm is formed. An aluminum foil with a conductive undercoat layer is obtained.

**Analysis and tests**

1. Test of adhesive force of positive electrode plate

Fig. 2 shows in (a) to (d) the flowchart of a peeling test. As shown in Fig. 2 (a), first of all, a steel plate 510 with dimensions 30 mm width × 100 mm length is provided. As shown in Fig. 2 (b), a double-sided adhesive tape 520 with dimensions 20 mm width × 30 mm length is then provided, and the double-sided adhesive tape 520 is adhered to the steel plate 510, with one width side of the double-sided adhesive tape 520 being aligned with one width side of the steel plate 510. As shown in Fig. 2 (c), an electrode plate 530 to be tested is then provided, wherein the dimension of the electrode plate 530 to be tested is 20 mm width × 180 mm length. The electrode plate 530 to be tested covers the double-sided adhesive tape 520 (both sides are aligned), with the coating face of the electrode plate 530 facing the double-sided adhesive tape 520. Since the length of the electrode plate 530 to be tested is longer than that of the double-sided adhesive tape 520, some areas of the electrode plate 520 to be tested are not bonded to the double-sided adhesive tape. As shown in Fig. 2 (d), the steel plate 510 is fixed on a base of a tensile testing machine, the end that is not bonded to the double-sided adhesive tape of the electrode plate 530 to be tested is clamped by a clamp, and the clamp is then stretched in the direction to the other end (as shown by the arrow), with the direction of the stretching force being perpendicular to the steel plate 510 and at a certain distance from the surface of the steel plate 510. While stretching and peeling off the electrode plate to the outside of the paper, the steel plate moves upwards to keep the stretching direction perpendicular to the peeling position of the electrode plate. The electrode plate 530 is gradually peeled off the steel plate during stretching. The stretching speed of the clamp is 50 mm/min during the stretching. During stretching, the tension force of the clamp is recorded, and after the tension force is stable, peeling continued to a length of 40 mm. The average tension force over this peeling length is the adhesive force (in N).

2. Test of DC resistance value of battery

At 25°C, the battery is charged to 4.3 V at a constant current and constant voltage at 1.0 C (1.0 C referred to the nominal capacity); and at a rate of 1.0 C, the power of the battery is adjusted to 50% SOC. After standing for 5 min, the battery is discharged at 4C at a constant current ($I_m$) for 30 s (voltage data are collected once every 1 s), the initial voltage $U_0$ and the voltage $U_{30}$ after 30 s of discharge are recorded, and the value of DC resistance (DCR) is calculated according to the following equation.

$$\text{Value of DC resistance} = (U_0 - U_{30})/I_m$$

Taking the direct current resistance value of the battery of example 1P as 100%, the changes of other examples and comparative examples relative to example 1P are expressed in percentage form.

3. Number of cycles of the battery at a capacity retention rate of 80% at 45°C (hereinafter referred to as "number of cycles for 80% capacity")

In a constant-temperature environment at 45°C, at 2.5 to 4.3 V, a full battery is charged at 1C to 4.3 V, and then charged at a constant voltage of 4.3 V until the current is less than or equal to 0.05 mA. The full battery is allowed to stand for 5 min, and then discharged at 1C to 2.5 V, and the discharge capacity at this moment is recorded as D0. The above-mentioned charge/discharge cycle is repeated until the discharge capacity is reduced to 80% of D0. The number of cycles experienced by the battery at this time is recorded.

According to the above-mentioned detection and analysis methods, the adhesive force, the direct-current resistance value of the battery and the number of cycles for capacity retention rate of 80% at 45°C of the positive electrode plates prepared in the above examples 1P-27P and comparative examples 9P-12P are tested, and the results are shown in Table 3P below.

Table 3P

| | Adhesive force of positive electrode plate/N | Direct-current resistance example 1P-based | Number of cycles for 80% capacity |
|---|---|---|---|
| Comparative example 1P | 7.5 | 260% | 201 |
| Comparative example 2P | 6.4 | 254% | 233 |
| Comparative example 3P | 7.3 | 286% | 234 |
| Comparative example 4P | 7.5 | 210% | 252 |
| Comparative example 5P | 7.5 | 200% | 489 |
| Comparative example 6P | 6.6 | 175% | 500 |
| Comparative example 7P | 6.5 | 180% | 495 |
| Comparative example 8P | 7 | 143% | 506 |
| Comparative example 9P | 6.8 | 140% | 550 |
| Comparative example 10P | 13.8 | 131% | 675 |
| Comparative example 11P | 15.5 | 180% | 400 |
| Comparative example 12P | 10.2 | 109% | 612 |
| Example 1P | 10 | 100% | 765 |
| Example 2P | 15 | 95% | 793 |
| Example 3P | 10 | 91% | 750 |
| Example 4P | 13 | 93% | 735 |
| Example 5P | 16 | 90% | 780 |
| Example 6P | 16 | 90% | 806 |
| Example 7P | 15 | 87% | 900 |
| Example 8P | 14 | 89% | 844 |
| Example 9P | 10.5 | 90% | 764 |
| Example 10P | 10.8 | 92% | 706 |
| Example 11P | 10.4 | 100% | 640 |
| Example 12P | 12.8 | 87% | 1005 |
| Example 13P | 10.5 | 85% | 1065 |
| Example 14P | 12.4 | 80% | 1100 |
| Example 15P | 11.1 | 80% | 1059 |
| Example 16P | 12.3 | 82% | 1023 |
| Example 17P | 11.8 | 88% | 1020 |

(continued)

| | Adhesive force of positive electrode plate/N | Direct-current resistance example 1P-based | Number of cycles for 80% capacity |
|---|---|---|---|
| Example 18P | 10.6 | 85% | 1166 |
| Example 19P | 12.2 | 80% | 1145 |
| Example 20P | 13.5 | 79% | 1037 |
| Example 21P | 10.8 | 77% | 1100 |
| Example 22P | 11.5 | 73% | 1106 |
| Example 23P | 11 | 70% | 981 |
| Example 24P | 12.7 | 81% | 1000 |
| Example 25P | 12.7 | 88% | 1003 |
| Example 26P | 10 | 83% | 1063 |
| Example 27P | 10.6 | 85% | 1083 |

It can be seen from Table 3P that the positive electrode plates of examples 1P - 27P show improved adhesive forces, and the batteries of examples 1P - 27P show reduced direct-current resistance and increased cycle capacity retention rate.

Comparative example 9P (without a conductive undercoat layer), comparative example 10P (without a first polymer), comparative example 11P (replacing the first polymer with a polymer I), comparative example 12P (replacing the first water-based binder with an I binder) fail to achieve the effect of the above-mentioned improvement.

Examples 28P - 34P (with changes in composition of the first polymer)

Examples 28P - 34P are different from example 1P by step 2). Other step parameters are the same as those in example 1P.

In step 2), the compositions of the first polymer used in examples 28P - 34P are different from those in example 1P, and specifically the weight percentages of the second monomeric unit and the third monomeric unit are different from those in example 1P. The compositions of the first polymers in examples 28P - 34P are shown in Table 4P below.

Table 4P

| | First monomeric unit weight percentage M1 | Second monomeric unit weight percentage M2 | Third monomeric unit weight percentage M3 | Fourth monomeric unit weight percentage M4 | M3/(M2 + M3) |
|---|---|---|---|---|---|
| Example 1P | 34% | 64.0% | 1% | 1% | 1.54% |
| Example 28P | 34% | 65.0% | 0 | 1% | 0 |
| Example 29P | 34% | 64.9675% | 0.0325% | 1% | 0.05% |
| Example 30P | 34% | 64.935% | 0.065% | 1% | 0.10% |
| Example 31P | 34% | 64.87% | 0.13% | 1% | 0.20% |
| Example 32P | 34% | 64.805% | 0.195% | 1% | 0.30% |
| Example 33P | 34% | 64.675% | 0.325% | 1% | 0.50% |

(continued)

| | First monomeric unit weight percentage M1 | Second monomeric unit weight percentage M2 | Third monomeric unit weight percentage M3 | Fourth monomeric unit weight percentage M4 | M3/(M2 + M3) |
|---|---|---|---|---|---|
| Example 34P | 34% | 59.8% | 5.2% | 1% | 8.0% |

Examples 35P - 39P (with change in conductive undercoat layer thickness)

Examples 35P - 39P are different from example 1P by step 2). Other step parameters are the same as those in example 1P.

In step 2), the thickness of the conductive undercoat layer in examples 28P - 34P is different from that in Example 1P, see Table 5P for details.

Table 5P

| | Example 1P | Example 35P | Example 36P | Example 37P | Example 38P | Example 39P |
|---|---|---|---|---|---|---|
| Thickness of conductive undercoat layer | 5 μm | 1 μm | 3 μm | 7 μm | 10 μm | 20 μm |

Examples 40P - 45P (with changes in conductive undercoat layer composition)

Examples 40P - 45P are different from example 1P by step 2). Other step parameters are the same as those in example 1P.

In step 2), the composition of the conductive undercoat layer (the ratio of the first polymer, the first water-based binder to the first conductive agent) of examples 40P - 45P is different from that in example 1, see Table 6P for details.

Table 6P

| | First polymer parts by weight | First water-based binder parts by weight | First conductive agent parts by weight |
|---|---|---|---|
| Example 1P | 15 | 40 | 45 |
| Example 40P | 5 | 45 | 50 |
| Example 41P | 10 | 40 | 50 |
| Example 42P | 20 | 30 | 50 |
| Example 43P | 10 | 80 | 10 |
| Example 44P | 10 | 65 | 25 |
| Example 45P | 10 | 50 | 40 |

According to the above-mentioned testing and analysis methods, the adhesive force, the direct-current resistance value of the battery and the number of cycles for capacity retention rate of 80% at 45°C of the positive electrode plates prepared in the above examples 1P, and 28P - 45P are tested, and the results are shown in Table 7P below.

Table 7P

| | Adhesive force of electrode plate | Direct-current resistance | Number of cycles for 80% capacity |
|---|---|---|---|
| Example 1P | 10 | 100% | 765 |
| Example 28P | 11.5 | 101% | 750 |
| Example 29P | 11.5 | 102% | 754 |
| Example 30P | 11 | 98% | 760 |

(continued)

| | Adhesive force of electrode plate | Direct-current resistance | Number of cycles for 80% capacity |
|---|---|---|---|
| Example 31P | 11.2 | 99% | 732 |
| Example 32P | 10.8 | 99% | 774 |
| Example 33P | 10.3 | 104% | 761 |
| Example 34P | 10 | 245% | 502 |
| Example 35P | 18.5 | 90% | 740 |
| Example 36P | 7.3 | 100% | 720 |
| Example 37P | 10 | 100% | 779 |
| Example 38P | 12.7 | 120% | 800 |
| Example 39P | 20 | 150% | 778 |
| Example 40P | 8 | 100% | 730 |
| Example 41P | 10.3 | 105% | 680 |
| Example 42P | 12 | 103% | 701 |
| Example 43P | 10.7 | 145% | 600 |
| Example 44P | 15.5 | 130% | 635 |
| Example 45P | 15 | 110% | 630 |

It can be seen from Table 7P that the positive electrode plates of examples 28P - 45P show provided adhesive forces, and the batteries of examples 28P - 45P show reduced direct-current resistance and increased cycle capacity retention rate. When the value of M3/(M2 + M3) is 0-5%, the battery exhibited a significant decrease in mass impedance.

Examples 46P - 54P

Examples 46P - 54P are different from example 1P by step 3). Other step parameters are the same as those in example 1P.

In step 3) in examples 46P - 54P, the positive electrode active material ($Li_{0.994}Mo_{0.001}Mn_{0.65}Fe_{0.35}P_{0.999}Si_{0.001}O_{3.999}F_{0.001}$) prepared in the above example 1, and a conductive agent acetylene black, a binder polyvinylidene fluoride (PVDF), a dispersant and an infiltration agent are mixed uniformly in an N-methylpyrrolidone solvent system at a weight ratio of (92-$Y_1$-$Y_2$) : 2.5 : 5.5 : $Y_1$ : $Y_2$, to obtain a positive electrode slurry, the positive electrode slurry is coated on both sides of the aluminum foil with a conductive undercoat layer, followed by drying and cold pressing, to form a positive electrode film layer, so as to obtain a positive electrode plate. The positive electrode film layer has a single-side surface density of 0.025 g/cm$^2$ and a compacted density of 2.4 g/cm$^3$.

The infiltration agent in examples 46P - 54P is a maleic anhydride-styrene copolymer (molecular weight: 5000). The dispersant of examples 46P - 54P is the second polymer.

In the positive electrode plates of examples 46P - 54P, the first polymer (from the conductive undercoat layer) and the second polymer (from the positive electrode film layer)

The second polymer is a hydrogenated nitrile rubber, which contains a fifth monomeric unit, a sixth monomeric unit, and a seventh monomeric unit. The weight percentages of the five monomeric unit, the sixth monomeric unit and the seventh monomeric unit in the polymer, and the weight-average molecular weight of the second polymer are shown in Table 8P.

The fifth monomeric unit is a monomeric unit represented by formula 1;

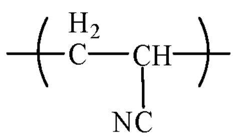

formula 7

the sixth monomeric unit is selected from at least one of a group consisting of a monomeric unit represented by formula

8 and a monomeric unit represented by formula 9

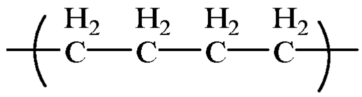

formula 8

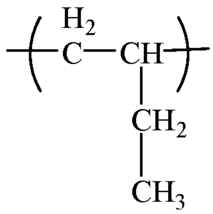

formula 9

the seventh monomeric unit is selected from at least one of a group consisting of a monomeric unit represented by formula 10 and a monomeric unit represented by formula 11

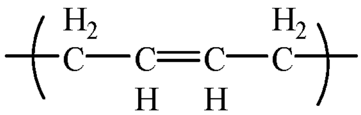

formula 10

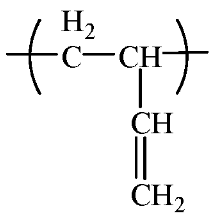

formula 11

Table 8P

| Fifth monomeric unit weight percentage M5 | Sixth monomeric unit weight percentage M6 | Seventh monomeric unit weight percentage M7 | Weight-average molecular weight/10,000 |
|---|---|---|---|
| 45% | 54.9% | 0.1% | 22 |

In step 3) in examples 46P - 54P, the proportions of the dispersant (second polymer) $Y_1$ and the proportions of the infiltration agent (a maleic anhydride-styrene copolymer) $Y_2$ and the ratio thereof $Y_1/Y_2$ are shown in Table 9P below.

In the positive electrode plates of examples 46P - 54P, the mass ratio of the first polymer (from the conductive undercoat layer) to the second polymer (from the positive electrode film layer) is 2 : 1.

Table 9P

| | $Y_1$ | Y2 | $Y_1/Y_2$ |
|---|---|---|---|
| Example 46P | 0.20 | 0.30 | 0.67 |
| Example 47P | 0.10 | 0.50 | 0.20 |
| Example 48P | 0.50 | 0.50 | 1.00 |
| Example 49P | 1 | 0.5 | 2 |
| Example 50P | 0.25 | 0.05 | 5.00 |
| Example 51P | 0.25 | 0.20 | 1.25 |
| Example 52P | 0.25 | 0.30 | 0.83 |
| Example 53P | 0.25 | 0.80 | 0.31 |

(continued)

| | $Y_1$ | Y2 | $Y_1/Y_2$ |
|---|---|---|---|
| Example 54P | 0.25 | 2 | 0.13 |

According to the above-mentioned testing and analysis methods, the adhesive force, the direct-current resistance value of the battery and the number of cycles for capacity retention rate of 80% at 45°C of the positive electrode plates prepared in the above examples 1P, and 46P - 54P are tested, and the results are shown in Table 10P below.

Table 10P

| | Adhesive force of electrode plate | Direct-current resistance | Number of cycles |
|---|---|---|---|
| Example 1P | 10 | 100% | 765 |
| Example 46P | 74 | 93% | 862 |
| Example 47P | 60 | 95% | 870 |
| Example 48P | 176 | 124% | 310 |
| Example 49P | 183 | 160% | 208 |
| Example 50P | 100 | 100% | 700 |
| Example 51P | 105 | 99% | 930 |
| Example 52P | 110 | 98% | 881 |
| Example 53P | 108 | 106% | 490 |
| Example 54P | 100 | 116% | 110 |

As shown in Table 10P, on the basis of the above new conductive undercoat layer, combined with a new positive electrode film layer containing a dispersant and an infiltration agent, the adhesive force of the electrode plate can be further improved, and/or the direct-current resistance of the battery can be reduced, and/or the cycling performance of the battery is improved.

As could be seen from the above experimental data, the present application provides a new positive electrode plate, a secondary battery, and a power consuming device. The positive electrode plate comprises a new positive electrode active material and a new conductive undercoat layer.

The new positive electrode active materials achieve better effects in one or even all aspects of cycling performance, high-temperature stability, gram capacity and compacted density.

The new conductive undercoat layer achieves better effects in one or even all aspects of providing the adhesive force of the electrode plate, reducing the direct-current resistance of the battery, and improving the cycling performance of the battery.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. A positive electrode plate, comprising a positive electrode current collector, a positive electrode film layer provided on at least one surface of the positive electrode current collector, and a conductive undercoat layer between the positive electrode current collector and the positive electrode film layer, wherein

   the positive electrode film layer comprises a positive electrode active material of a chemical formula of $Li_aA_xMn_{1-y}B_yP_{1-z}C_zO_{4-n}D_n$, wherein A comprises one or more elements selected from Zn, Al, Na, K, Mg, Nb, Mo and W, B comprises one or more elements selected from Ti, V, Zr, Fe, Ni, Mg, Co, Ga, Sn, Sb, Nb and Ge, C comprises one or more elements selected from B (boron), S, Si and N, and D comprises one or more elements

selected from S, F, Cl and Br; and a is selected from a range of 0.9 to 1.1, x is selected from a range of 0.001 to 0.1, y is selected from a range of 0.001 to 0.5, z is selected from a range of 0.001 to 0.1, and n is selected from a range of 0.001 to 0.1; and the positive electrode active material is electrically neutral; and
the conductive undercoat layer includes a first polymer, a first water-based binder, and a first conductive agent, wherein
the first polymer comprises

a first monomeric unit represented by formula 1;
a second monomeric unit selected from at least one of a group consisting of a monomeric unit represented by formula 2 and a monomeric unit represented by formula 3;
a third monomeric unit selected from at least one of a group consisting of a monomeric unit represented by formula 4 and a monomeric unit represented by formula 5; and
a fourth monomeric unit represented by formula 6, in which $R^1$, $R^2$, and $R^3$ each independently represent H, a carboxyl, an ester group, and groups of substituted or unsubstituted C1-C10 alkyl, C1-C10 alkoxy, C2-C10 alkenyl, and C6-C10 aryl, $R^4$ represents H, and groups of substituted or unsubstituted: C1-C10 alkyl, C1-C10 alkoxy, C2-C10 alkenyl, and C6-C10 aryl;

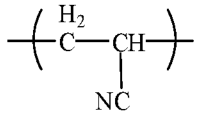
formula 1

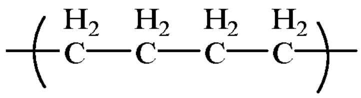
formula 2

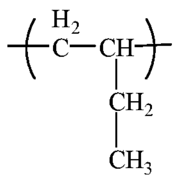
formula 3

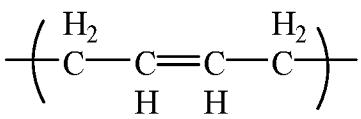
formula 4

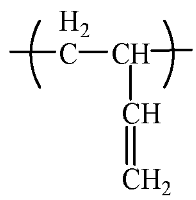
formula 5

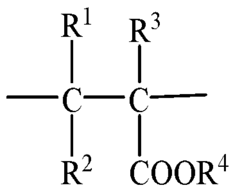
formula 6.

**2.** The positive electrode plate according to claim 1, wherein based on the total mass of the first polymer,

the mass percentage content of the first monomeric unit is M1, and M1 is 10%-55%, optionally 25%-55%; and/or
the mass percentage content of the second monomeric unit is M2, and M2 is 40%-80%, optionally 50%-70%; and/or
the mass percentage content of the third monomeric unit is M3, and M3 is 0%-10%, optionally 0.001%-2%; and/or
the mass percentage content of the fourth monomeric unit is M4, and M4 is 0%-10%, optionally 0.1%-1%.

**3.** The positive electrode plate according to claim 2, wherein M3/(M2 + M3) is 0%-5%, optionally 0.001%-1%.

**4.** The positive electrode plate according to any one of claims 1-3, wherein

the first polymer is one or more selected from hydrogenated nitrile rubbers, and hydrogenated carboxylated nitrile rubbers; and/or
the first polymer has a weight-average molecular weight of 50,000-1,500,000, optionally 200,000-400,000.

**5.** The positive electrode plate according to any one of claims 1-4, wherein

the first water-based binder includes one or more selected from a water-based polyacrylic resin and a derivative thereof, a water-based amino-modified polypropylene resin and a derivative thereof, a polyvinyl alcohol and a derivative thereof, optionally a water-based acrylic acid-acrylate copolymer; and/or
the first water-based binder has a weight-average molecular weight of 200,000-1,500,000, optionally 300,000-400,000.

**6.** The positive electrode plate according to any one of claims 1-5, wherein the first conductive agent includes one or more selected from superconductive carbon, conductive graphite, acetylene black, carbon black, Ketjen black, carbon dots, carbon nanotubes, graphene, and carbon nanofibers, optionally one or more selected from carbon nanotubes, graphene, and carbon nanofibers.

**7.** The positive electrode plate according to any one of claims 1-6, wherein based on the total mass of the conductive undercoat layer,

the mass percentage content of the first polymer is X1, and X1 is 5%-20%, optionally 5%-10%; and/or
the mass percentage content of the first water-based binder is X2, and X2 is 30%-80%, optionally 40%-50%; and/or
the mass percentage content of the first conductive agent is X3, and X3 is 10%-50%, optionally 40%-50%.

**8.** The positive electrode plate according to any one of claims 1-7, wherein the thickness of the conductive undercoat layer is 1-20 μm, optionally 3-10 μm.

**9.** The positive electrode plate according to any one of claims 1-8, wherein the positive electrode film layer further includes one or more selected from an infiltration agent and a dispersant, optionally, the positive electrode film layer further includes both an infiltration agent and a dispersant.

**10.** The positive electrode plate according to claim 9, wherein the infiltration agent has a surface tension of 20 mN/m-40 mN/m, optionally, the infiltration agent includes at least one of the functional groups of: -CN, $-NH_2$, -NH-, -N-, -OH, -COO-, -C(=O)-O-C(=O)-.

**11.** The positive electrode plate according to claim 9 or 10, wherein

the infiltration agent includes one or more selected from small molecule organic solvents and low molecular weight polymers,
optionally, the small molecule organic solvent includes one or more selected from an alcohol amine compound, an alcohol compound, and a nitrile compound, optionally, the alcohol amine compound has a number of carbon atom of 1-16, optionally 2-6;
optionally, the low molecular weight polymer includes one or more selected from a maleic anhydride-styrene copolymer, polyvinylpyrrolidone, polysiloxane, and optionally, the low molecular weight polymer has a weight-average molecular weight of not more than 6000, optionally 3000-6000.

**12.** The positive electrode plate according to any one of claims 9-11, wherein the dispersant includes a second polymer,

and the second polymer comprises:

a fifth monomeric unit represented by formula 7;
a sixth monomeric unit selected from at least one of a group consisting of a monomeric unit represented by formula 8 and a monomeric unit represented by formula 9; and
a seventh monomeric unit selected from at least one of a group consisting of a monomeric unit represented by formula 10 and a monomeric unit represented by formula 11;

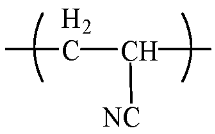

formula 7

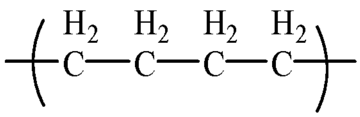

formula 8

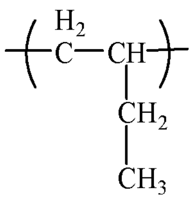

formula 9

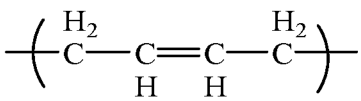

formula 10

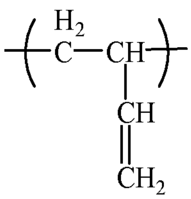

formula 11.

**13.** The positive electrode plate according to claim 12, wherein based on the total mass of the second polymer,

the mass percentage content of the fifth monomeric unit is M5, and M5 is 10% - 55%, optionally 25% - 55%; and/or
the mass percentage content of the sixth monomeric unit is M6, and M6 is 40% - 80%, optionally 50% - 70%; and/or
the mass percentage content of the seventh monomeric unit is M7, and M7 is 0% - 10%, optionally 0.001% - 2%.

**14.** The positive electrode plate according to claim 13, wherein M7/(M6 + M7) is 0% - 5%, optionally 0.001% - 1%.

**15.** The positive electrode plate according to any one of claims 12-14, wherein

the second polymer is a hydrogenated nitrile rubber; and/or
the second polymer has a weight-average molecular weight of 50,000-500,000, optionally 150,000-350,000.

**16.** The positive electrode plate according to any one of claims 9-15, wherein based on the total mass of the positive electrode film layer,

the mass percentage content of the dispersant is Y1, and Y1 is 0.05% - 1%, optionally 0.1% - 0.5%; and/or

the mass percentage content of the infiltration agent is Y2, and Y2 is 0.05% - 2%, optionally 0.2% - 0.8%.

**17.** The positive electrode plate according to claim 16, wherein Y1/Y2 is 0.05-20, optionally 0.1-1, further 0.3-0.8.

**18.** The positive electrode plate according to any one of claims 9-17, wherein in the positive electrode plate, the mass ratio of the first polymer to the second polymer is 1.5-5, optionally 2-3.

**19.** The positive electrode plate according to any one of claims 1-18, wherein A, C and D are each independently any element in the respective ranges, and B is at least two elements in the range thereof;

and optionally,
A is any element selected from Mg and Nb, and/or,
B is at least two elements selected from Fe, Ti, V, Co and Mg, and optionally Fe and one or more elements selected from Ti, V, Co and Mg, and/or
C is S, and/or,
D is F.

**20.** The positive electrode plate according to any one of claims 1-19, wherein

the x is selected from a range of 0.001 to 0.005; and/or
y is selected from a range of 0.01 to 0.5, optionally from a range of 0.25 to 0.5; and/or
z is selected from a range of 0.001 to 0.005; and and/or
n is selected from a range of 0.001 to 0.005.

**21.** The positive electrode plate according to any one of claims 1-20, wherein (1-y) : y is in a range of 1 to 4, optionally a range of 1.5 to 3, and a : x is in a range of 9 to 1,100, optionally a range of 190 to 998.

**22.** The positive electrode plate according to any one of claims 1-21, wherein the lattice change rate of the positive electrode active material is 8% or less, optionally 4% or less.

**23.** The positive electrode plate according to any one of claims 1-22, wherein the Li/Mn antisite defect concentration of the positive electrode active material is 2% or less, optionally 0.5% or less.

**24.** The positive electrode plate according to any one of claims 1-23, wherein the surface oxygen valence state of the positive electrode active material is not more than -1.82, optionally -1.89 to -1.98.

**25.** The positive electrode plate according to any one of claims 1-24, wherein the compacted density of the positive electrode active material under 3 T is 2.0 $g/cm^3$ or more, optionally 2.2 $g/cm^3$ or more.

**26.** The positive electrode plate according to any one of claims 1-25, wherein the surface of the positive electrode active material is coated with carbon.

**27.** A secondary battery, comprising a positive electrode plate according to any one of claims 1-26.

**28.** A power consuming device, comprising a secondary battery of claim 27.

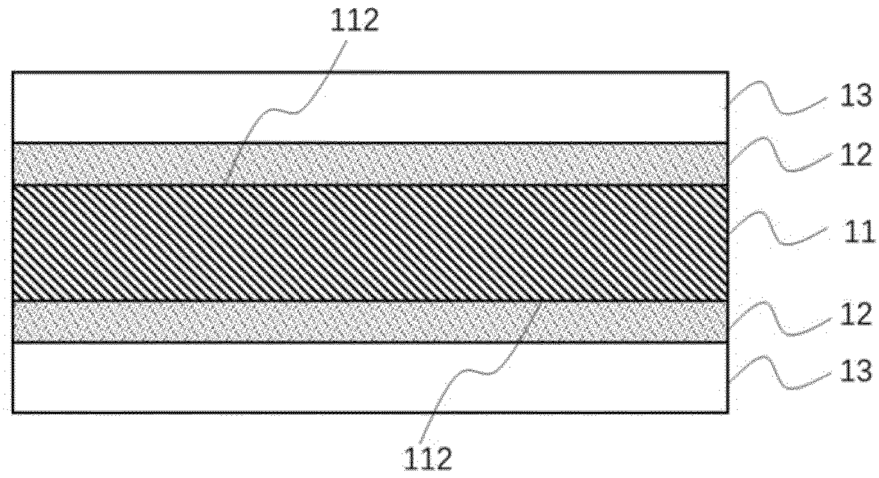


*FIG. 1*

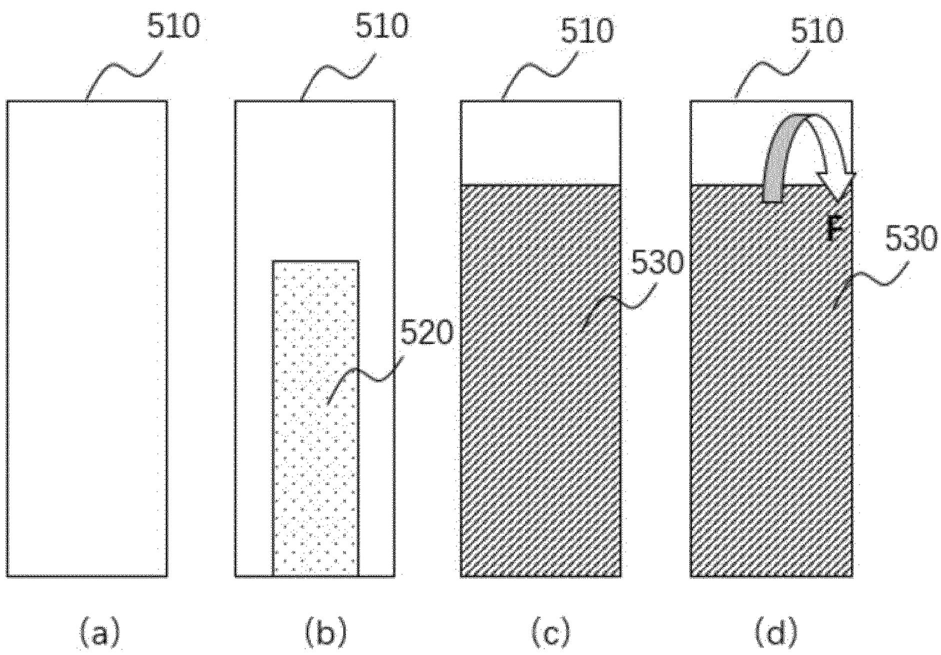


*FIG. 2*

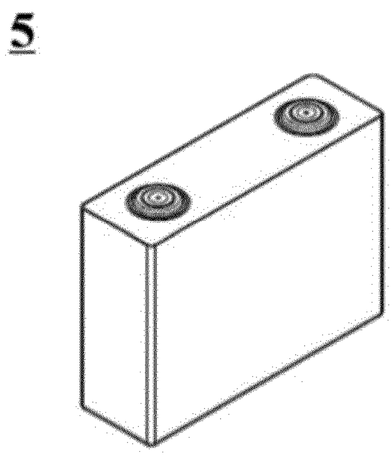


FIG. 3

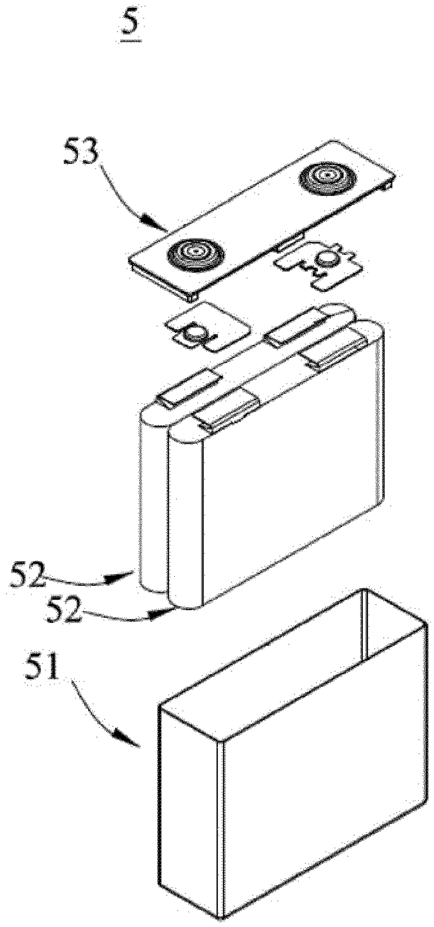


FIG. 4

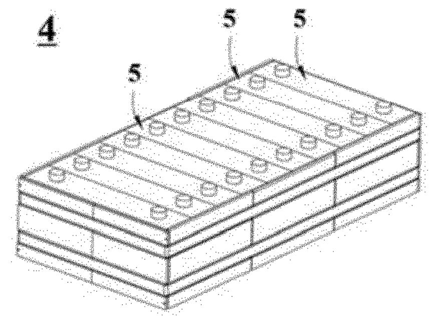


FIG. 5

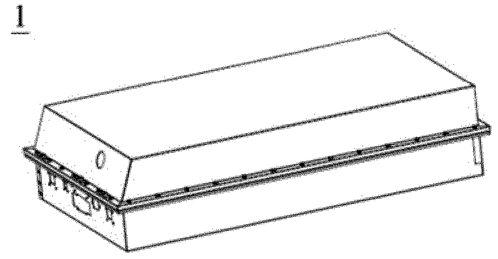


FIG. 6

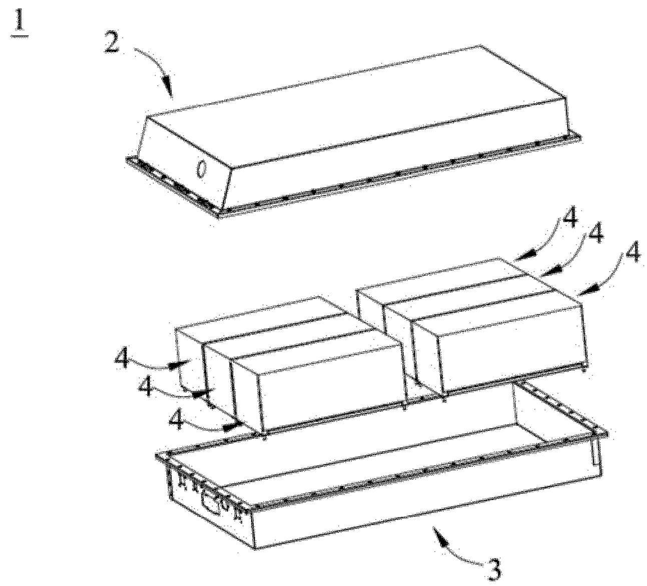


FIG. 7

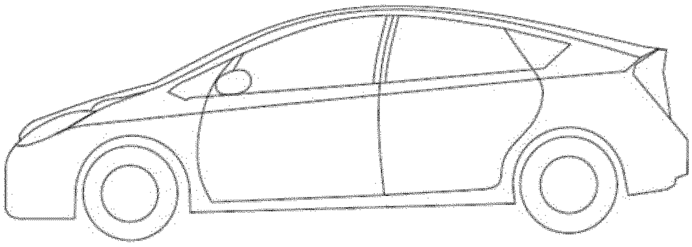

*FIG. 8*

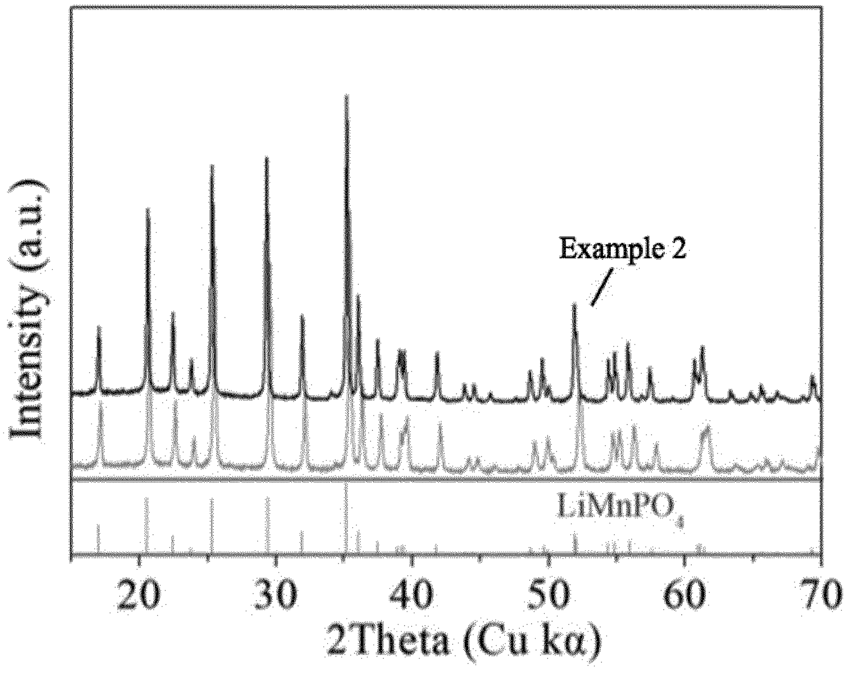


*FIG. 9*

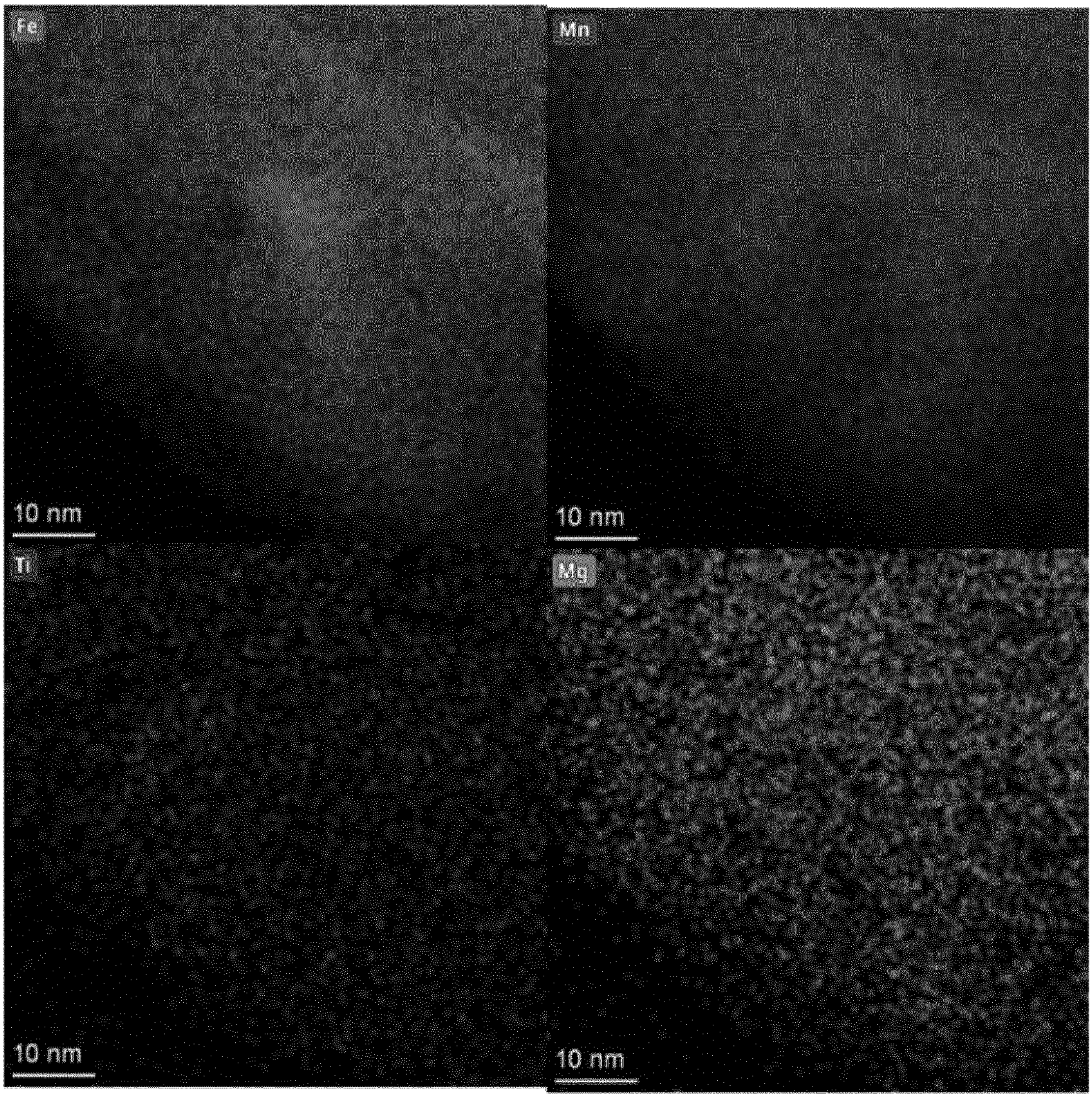


FIG. 10

**INTERNATIONAL SEARCH REPORT**

International application No. **PCT/CN2022/084556**

**A. CLASSIFICATION OF SUBJECT MATTER**

H01M 4/36(2006.01)i； H01M 4/66(2006.01)i； H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 导电, 丁腈, 磷酸锰锂, 掺杂, 各位, 全位, 锂位, 锰位, 磷位, 氧位, 导电, 涂层, LiMnPO4, LiMPO4, LMP, HXNBR, HNBR, dop+

**C. DOCUMENTS CONSIDERED TO BE RELEVANT**

| Category* | Citation of document, with indication, where appropriate, of the relevant passages | Relevant to claim No. |
|---|---|---|
| Y | CN 103682266 A (GUANGZHOU RESEARCH INSTITUTE OF NON-FERROUS METALS) 26 March 2014 (2014-03-26)<br>description, paragraphs [0003]-[0025] | 1-28 |
| Y | CN 104577115 A (QINGHAI CONTEMPORARY AMPEREX TECHNOLOGY LTD.) 29 April 2015 (2015-04-29)<br>description, paragraphs [0005]-[0044] | 1-28 |
| Y | CN 102959768 A (GS YUASA INTERNATIONAL LTD.) 06 March 2013 (2013-03-06)<br>description, paragraphs [0021]-[0098], and figure 1 | 1-28 |
| A | CN 111342018 A (SICHUAN LIANWU NEW ENERGY TECHNOLOGY CO., LTD.) 26 June 2020 (2020-06-26)<br>entire document | 1-28 |
| A | JP 2002373655 A (SHIN KOBE ELECTRIC MACHINERY CO., LTD.) 26 December 2002 (2002-12-26)<br>entire document | 1-28 |
| A | JP 2019036490 A (MITSUI CHEMICALS INC.) 07 March 2019 (2019-03-07)<br>entire document | 1-28 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **20 October 2022** | **29 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/084556**

| Patent document cited in search report | | | Publication date (day/month/year) | Patent family member(s) | | | Publication date (day/month/year) |
|---|---|---|---|---|---|---|---|
| CN | 103682266 | A | 26 March 2014 | CN | 103682266 | B | 17 August 2016 |
| CN | 104577115 | A | 29 April 2015 | JP | 2016127002 | A | 11 July 2016 |
| | | | | US | 2016190584 | A1 | 30 June 2016 |
| | | | | JP | 6157563 | B2 | 05 July 2017 |
| CN | 102959768 | A | 06 March 2013 | EP | 2592674 | A1 | 15 May 2013 |
| | | | | JP | WO2012005301 | A1 | 05 September 2013 |
| | | | | WO | 2012005301 | A1 | 12 January 2012 |
| | | | | KR | 20130094219 | A | 23 August 2013 |
| | | | | US | 2013089781 | A1 | 11 April 2013 |
| | | | | EP | 2592674 | A4 | 25 June 2014 |
| | | | | US | 8932765 | B2 | 13 January 2015 |
| | | | | CN | 102959768 | B | 01 April 2015 |
| | | | | EP | 2592674 | B1 | 30 September 2015 |
| | | | | JP | 5975347 | B2 | 23 August 2016 |
| | | | | KR | 101812824 | B1 | 27 December 2017 |
| CN | 111342018 | A | 26 June 2020 | | None | | |
| JP | 2002373655 | A | 26 December 2002 | JP | 4310937 | B2 | 12 August 2009 |
| JP | 2019036490 | A | 07 March 2019 | | None | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 245332009 T